(19) Europäisches Patentamt / European Patent Office / Office européen des brevets

(11) EP 3 062 130 B1

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **15156769.0**

(22) Anmeldetag: **26.02.2015**

(51) Internationale Patentklassifikation (IPC):
***G01V 8/12*** *(2006.01)* ***H05B 45/12*** *(2020.01)*
***H05B 45/395*** *(2020.01)*

(52) Gemeinsame Patentklassifikation (CPC):
**H05B 45/395; G01V 8/12; H05B 45/12;** Y02B 20/30

(54) **VERFAHREN ZUR STEUERUNG MINDESTENS EINER LICHTSCHRANKE, STEUERUNGSSCHALTUNG UND DAMIT AUSGESTATTETES SELBSTBEDIENUNGSTERMINAL**

METHOD FOR CONTROLLING AT LEAST ONE LIGHT BARRIER, CONTROL CIRCUIT, AND SELF-SERVICE TERMINAL WITH SAME

DISPOSITIF DE COMMANDE D'AU MOINS UNE BARRIÈRE LUMINEUSE, CIRCUIT DE COMMANDE ET TERMINAL EN LIBRE-SERVICE EN ÉTANT ÉQUIPÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.08.2016 Patentblatt 2016/35**

(73) Patentinhaber: **Wincor Nixdorf International GmbH**
**33106 Paderborn (DE)**

(72) Erfinder: **Pawlak, Thorsten**
**33184 Altenbeken (DE)**

(56) Entgegenhaltungen:
**EP-A1- 0 891 044** **EP-A2- 0 418 989**
**WO-A1-94/17430** **DE-A1- 4 324 590**
**DE-C1- 4 237 311**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 062 130 B1

## Beschreibung

Die Erfindung betrifft ein Verfahren zur Steuerung mindestens einer Lichtschranke gemäß dem Oberbegriff des Anspruchs 1 sowie eine danach arbeitende Steuerungsschaltung und ein damit ausgestattetes Selbstbedienungsterminal. Insbesondere betrifft die Erfindung ein Verfahren zur Steuerung bzw. Regelung von mit Photosensoren ausgestatteten Lichtschranken zum Einsatz in Selbstbedienungsterminals.

Unter einer Lichtschranke versteht man im Allgemeinen eine Baugruppe mit einem elektro-optischen Sender, der Licht gerichtet in Form eines Lichtstrahls aussendet, und mit einem opto-elektrischen Empfänger, der das Licht empfängt und ein elektrisches Empfangssignal erzeugt. Ein nachgeschalteter Detektor bzw. eine Steuerung kann somit jede Unterbrechung des Lichtstrahls sofort erkennen und es können auf diese Weise schnell und zuverlässig Ereignisse berührungslos detektiert werden. Für Lichtschranken gibt es zahlreiche Einsatzgebiete, wie z.B. das Überwachen von Anlagen und Gefahrenbereichen. Auch werden Lichtschranken häufig zur kontaktlosen Überwachung von Zuständen und Abläufen in technischen Einrichtungen bzw. Geräten installiert. So werden Lichtschranken auch in Automaten und Selbstbedienungsterminal verbaut, um z.B. den Schließzustand von Gehäuseklappen, Schubladen oder dergleichen zu überwachen. Außerdem werden in bargeldverarbeitenden Automaten bzw. Geldautomaten Lichtschranken zur Überwachung von Transportvorgängen eingesetzt, die das Bargeld (Banknoten bzw. Geldscheine und ggf. Münzen) betreffen. Insbesondere wird mittels mehrerer Lichtschranken der Transportweg ausgehend von den einzelnen Geldscheinfächern bis hin zum Geldausgabeschacht des Geldautomaten überwacht. Beispielsweise werden einzelne Abschnitte des Transportweges jeweils von einer Lichtschranke überwacht.

Grundsätzlich besteht beim Einsatz von Lichtschranken das Problem, dass deren Funktionsfähigkeit durch Verschmutzung, Alterung und andere Einflüsse stark eingeschränkt werden kann, so dass häufig eine regelmäßige Wartung der im Betrieb befindlichen Lichtschranken erforderlich ist. Wünschenswert wäre es, eine Lösung zu finden, die sicherstellt, dass die Lichtschranken auch bei Verschmutzung, Verschleiß und dergleichen möglichst lange und zuverlässig arbeiten.

In der DE 10 038 025 A1 werden ein Verfahren und eine Vorrichtung zur Überwachung eines mit Lichtschranken versehenen Gefahrenbereiches offenbart. Es wird die Empfangshelligkeit der einzelnen Lichtstrahlen detektiert, wobei eine Lichtschranke als "frei" bewertet wird, wenn ihre Empfangshelligkeit oberhalb eines oberen Schwellwerts liegt, und als "unterbrochen", wenn die Empfangshelligkeit unterhalb eines unteren Schwellwerts liegt. Lichtstrahlen gelten als "abgeschwächt", wenn ihre Empfangshelligkeit zwischen den beiden Schwellwerten liegt. Die "abgeschwächten" Lichtstrahlen können je nach Anwendungsfall wahlweise dem Zustand "frei" oder "unterbrochen" zugeordnet werden.

Die DE 10 2005 047 337 A1 offenbart ein Verfahren zur Einstellung von Helligkeitsschwellen bei einem lichtempfindlichen Sensor, der als Präsenzmelder bzw. als Personen-Anwesenheitssensor dient. Das Verfahren ermöglicht das Einschalten einer Beleuchtung in Abhängigkeit von der aktuellen Beleuchtungssituation in einem Raum bzw. an einem Arbeitsplatz und enthält folgende Schritte: Speichern einer Strom/Spannung/Lux-Kennlinie in einem Mikro-Controller; Senden eines vorgegebenen Lux-Wertes für den Arbeitsplatz an den Mikro-Controller; Messen des aktuellen Lux-Wertes am Arbeitsplatz; Senden des gemessenen Lux-Wertes an den Mikro-Controller. Dann erfolgt eine schrittweise Änderung (Vergrößerung oder Verkleinerung) des Lastwiderstandes des lichtempfindlichen Sensors durch High/Low-Wahl von Mikro-Controller- oder Schieberegisterausgängen, bis der gemessene (manipulierte) Spannungswert am Gesamtlastwiderstand des lichtempfindlichen Sensors dem Spannungswert des aktuellen Luxwertes laut der im Mikro-Controller hinterlegten Kennlinie entspricht. Danach erfolgt eine Speicherung der ermittelten High/Low-Zustände (Bitmuster) in einem EEPROM und die dauerhafte Einstellung des ermittelten Widerstandswertes. Demnach wird eine empfangsseitige Anfangskalibrierung der Lichtschranke ermöglicht.

Die EP 0 418 989 A2 offenbart eine Lichtschranke (siehe dort Fig. 1) mit einem optischen Sender (18) zum Aussenden von Lichtimpulsen, einem optischen Empfänger (10) zum Empfang der Lichtimpulse, einer Ansteuerschaltung für den optischen Sender (18) mit einer Einstellvorrichtung für die Ausgangsleistung des optischen Senders (18), einer Erkennungsschaltung (12) für die empfangenen Lichtimpulse mit einem Generator für ein mit der Intensität der empfangenen Lichtimpulse variierendes Indikatorsignal und mit einer Anzeige (27) für eine zu geringe empfangene Intensität der Lichtimpulse. Die Lichtschranke ist so gestaltet, dass eine automatische Anpassung der Ausgangsleistung des optischen Senders (18) an Verschmutzungen oder Dejustierungen möglich ist.

Die DE 43 24 590 A1 offenbart eine Vorrichtung zur Regelung der Ansprechempfindlichkeit einer Lichtschrankenanordnung, wobei die Regelung gegenstandsabhängig während der gesamten Betriebsdauer auf einen Sollwert geregelt wird.

In der DE 42 37 311 C1 wird eine aus einem Sender und einem Empfänger bestehende Einrichtung zum Erfassen von Gegenständen offenbart, insbesondere eine Lichtschranke, bei der das Empfangssignal wenigstens einem Komparator zugeführt wird, der das Empfangssignal jeweils hinsichtlich seiner Ein- und Ausschaltbedingung sowie bezüglich der Signalreserve überprüft, wobei der Ausgang des Komparators an einen Signaleingang eines nach seiner Aktivierung Sendeimpulse erzeugenden Mikrocontrollers angeschlossen ist die Vergleichsspannungen über mit einem Eingang des Komparators verbundene und von korrespondierenden Schaltausgängen des Mikrocontrollers aktivierte Widerstände erzeugt werden. Zur Kompensation von internen oder externen Störungen sind zwei weitere Komparatoren vorgesehen, die das Ausgangssignal des Empfängers mit einem oberhalb bzw. unterhalb des Schwellwerts liegenden oberen bzw. unteren Schwellwert vergleichen. Wird der untere Schwellwert unterschritten, so liegt eine interne Störung beispielsweise in Form von verschmutzten Austrittsfenstern der Lichtschranke vor. Wird der obere Schwellwert überschritten, so liegt ebenfalls eine Störung vor, beispielsweise aufgrund der Alterung der Lichtquelle.

Demzufolge sind Verfahren und Vorrichtungen zur Steuerung mindestens einer Lichtschranke bekannt, bei dem in Abhängigkeit von dem empfangenen Licht ein aktueller Empfangspegel ermittelt wird, wobei mittels einer Steuerschaltung geprüft wird, ob der aktuelle Empfangspegel einen unteren Schwellenwert unterschreitet oder einen oberen Schwellenwert überschreitet, um festzustellen, ob die Lichtschranke unterbrochen ist oder nicht.

Mit den bekannten Verfahren können zwar durch Schwellenwerte die Detektionsbereiche genau vorgebeben werden; jedoch kann hierdurch nicht verhindert werden, dass während eines eventuell langjährigen Betriebs der Lichtschranke sich ihr Funktionsverhalten, z.B. durch Verschmutzung, Verschleiß, Alterung und dergleichen, verschlechtert. Dies stellt insbesondere ein Problem dar, wenn Lichtschranken in leicht verschmutzenden Umgebungen von Automaten, Selbstbedienungsterminals oder ähnlichen Vorrichtungen eingesetzt werden.

Aufgabe der vorliegenden Erfindung ist es, ein Verfahren zur Steuerung mindestens einer Lichtschranke so zu verbessern, dass die genannten Nachteile in einer effektiven Weise überwunden werden. Insbesondere soll ein Verfahren der eingangs genannten Art so verbessert werden, dass auch über einen längeren Betriebszeitraum hin das Funktionsverhalten sich möglichst nicht merklich verschlechtert.

Gelöst wird die Aufgabe durch ein Verfahren zur Steuerung mindestens einer Lichtschranke mit den Merkmalen des Anspruchs 1 sowie durch eine Steuerschaltung zur Steuerung mindestens einer Lichtschranke mit den Merkmalen des Anspruchs 11.

Demnach zeichnet sich das hier vorgestellte Verfahren dadurch aus, dass die Schwellenwerte zur Entscheidung, ob die Lichtschranke frei oder unterbrochen ist, zunächst abhängig von einem vorgebbaren minimalen Empfangspegel, der eine untere Grenze für die vom Empfänger erzeugten, brauchbaren Empfangspegel markiert, so eingestellt werden, dass die Schwellenwerte jeweils einem Bruchteil des minimalen Empfangspegels entsprechen, wobei zwischen dem minimalen Empfangspegels und einem vorgebbaren Sättigungs-Empfangspegels ein zulässiger Empfangspegelbereich definiert wird, und dass in einer ersten Schrittfolge geprüft wird, ob der aktuelle Empfangspegel außerhalb dieses zulässigen Empfangspegelbereichs liegt, und falls dies der Fall ist, in einer zweiten Schrittfolge zumindest ein Parameter für den Betrieb des optischen Senders in Abhängigkeit des minimalen Empfangspegels und/oder des Sättigungspegels kalibriert wird. Dabei wird der Parameter für den Betrieb des optischen Senders (ein oder auch mehrere Betriebs-Parameter) kalibriert, indem eine Steigung einer für die Lichtschranke charakteristischen Kennlinie berechnet wird, und indem der Parameter auf einen Zielwert neu eingestellt wird, der in Abhängigkeit von der Steigung berechnet wird. Somit wird auf der Senderseite eine Kalibrierung mindestens eines Betriebs-Parameters, wie z.B. ein Betriebsstrom einer optischen Sendervorrichtung, insbesondere einer Sende-LED, vorgenommen, wenn der empfangsseitig gemessene Empfangspegel einen zulässigen Bereich verlässt. Dabei werden sowohl die Definition des zulässigen Empfangspegel-Bereichs wie auch die senderseitige Kalibrierung in Abhängigkeit von dem vorgebbaren minimalen Empfangspegel und/oder dem vorgebbaren Sättigungspegel durchgeführt.

Vorzugsweise gibt der Betriebs-Parameter einen Betriebsstrom bzw. eine Stromstufe für den optischen Sender an. Bei der Kalibrierung wird bevorzugter Weise die Steigung unter der Annahme berechnet, dass die jeweilige Kennlinie vom Nullpunkt ausgehend zunächst linear verläuft, so dass die Steigung gemäß der folgenden Formel berechnet werden kann:

$$grad = RV * w / SC ,$$

wobei RV der aktuelle Empfangspegel und w ein Wichtungsfaktor sowie SC der eingestellte Parameter ist, der insbesondere den Betriebsstrom bzw. die Stromstufe SC für den optischen Sender angibt. Der Wichtungsfaktor w ist optional und beträgt z.B. 1000. Durch die Wichtung kann erreicht werden, dass eine Fließkomma- (floating point) Berechnung vermieden wird und die Berechnung vornehmlich mit Integer-Werten durchgeführt werden kann, also schneller durchgeführt werden kann. Im Wesentlichen ist es aber die Annahme eines linearen Kurvenverlaufs, welche die Berechnung der Steigung (des Gradienten) erheblich vereinfacht und somit beschleunigt, und das bei einer vertretbaren Fehlerabweichung.

Im Zusammenhang mit der Gradienten-Berechnung kann dann der Zielwert für den neu einzustellenden Parameter (z.B. neue Stromstufe) gemäß der folgenden Formel berechnet werden:

$$TC = \{ TVm + (SL - TVm) / 2 \} * w / grad ,$$

wobei TVm der minimalen Empfangspegel; SL der Sättigungs-Empfangspegel; w ein bzw. der Wichtungsfaktor sowie grad die berechnete Steigung ist.

Vorzugsweise wird in der zweiten Schrittfolge (wenn der aktuelle Empfangspegel außerhalb des zulässigen Bereichs liegen sollte) ein Parameter, der einen Betriebsstrom für den Betrieb des optischen Senders angibt, in Abhängigkeit von dem minimalen Empfangspegel und dem Sättigungs-Empfangspegels kalibriert. Dazu wird z.B. für eine Treiberstufe des optischen Senders eine Stromstufe anhand dieser beiden Grenzwerte (minimaler Empfangspegel und Sättigungs-Empfangspegel) berechnet. Demnach wird mittels der Steuerschaltung bei einem zu stark abweichendem aktuellen Empfangspegel der Betrieb des optischen Senders gesteuert bzw. nachkalibriert.

Zudem können die Schwellwerte, welche ja zunächst / anfänglich abhängig von dem vorgebbaren minimalen Empfangspegels eingestellt bzw. kalibriert worden sind, dann im laufenden Betrieb abhängig vom aktuellen Empfangspegel neu kalibriert werden, sofern der aktuelle Empfangspegel weiterhin zu gering sein sollte.

Auch wird eine nach dem Verfahren arbeitende Steuerschaltung vorgeschlagen, die mit dem Empfänger oder einer diesem nachgeschalteten Wandlerstufe verbunden ist und einen von dem empfangenen Licht abhängigen aktuellen Empfangspegel ermittelt, wobei die Steuerschaltung den aktuellen Empfangspegel mit den beiden Schwellenwerten vergleicht, um eine Unterbrechung der Lichtschranke festzustellen. Die Steuerschaltung ist auch mit dem optischen Sender oder mit einer dem Sender vorgeschalteten Treiberstufe verbunden und steuert den Betrieb des optischen Senders. Dazu stellt die Steuerschaltung die beiden Schwellenwerte zunächst abhängig von einem vorgebbaren minimalen Empfangspegel so ein, dass die Schwellenwerte jeweils einem Bruchteil des minimalen Empfangspegels entsprechen (Anfangskalibierrung). Der zwischen dem minimalen Empfangspegel und einem vorgebbaren Sättigungs-Empfangspegel liegende Wertebereich ist als zulässiger Empfangspegelbereich definiert; und die Steuerschaltung prüft, ob der aktuelle Empfangspegel außerhalb dieses zulässigen Empfangspegelbereichs liegt. Falls dies der Fall ist, kalibriert die Steuerschaltung zumindest einen Parameter für den Betrieb des optischen Senders, also z.B. der Betriebsstrom für die Sende-LED, neu. Andernfalls bleibt die bestehende Kalibrierung unverändert erhalten.

Die Erfindung betrifft auch eine Anordnung bestehend aus einer Lichtschranke und einer erfindungsgemäßen Steuerschaltung, sowie ein damit ausgestattetes Selbstbedienungsterminal.

Die Steuerung kann durch eine dedizierte Hardware (HW), durch eine dedizierte Software (SW) oder auch durch eine HW/SW-Kombination realisiert werden kann. Die Steuerschaltung kann in mindestens einer Steuereinheit realisiert werden, beispielsweise in einem oder mehreren Slave-Controller(n), der/die den Lichtschranken nachgeschaltet sind, und in einem mit dem/den Slave-Controller(n) verbundenen Master-Controller. Dabei dienen die Slave-Controller mit Treiber und AD-Wandler sowie Mikrocontroller zur hardware-nahen Auswertung der Lichtschranken-Signale und Wandlung in Events. Der MasterControllerdient zur Auswertung der vom Slave kommenden Events und zur Steuerung der Kalibrierung. Ein noch vorhandener PC kann zur Visualisierung der Zustände (z.B. "Verschmutzung") und für manuelle Eingriffe in die Steuerung (z.B. manuell getriggertes Kalibrieren nach Säubern/Putzen der Lichtschranken) genutzt werden.

Durch die Erfindung wird erreicht, dass auch bei abgeschwächtem Lichtstrahl, der aufgrund von Alterung, Verschmutzung oder Feuchtigkeitsbeschlag der Optik und dergleichen, auftreten kann, die Lichtschranke weiterhin zuverlässig arbeitet.

Besonders vorteilhafte Ausgestaltungen der Erfindung ergeben sich auch aus den Unteransprüchen.

Wie bereits zuvor erwähnt, wird das Steuerungs-Verfahren vorzugsweise so ausgestaltet, dass in der zweiten Schrittfolge ein Parameter für den Betriebsstrom des optischen Senders kalibriert wird und zwar in Abhängigkeit von dem minimalen Empfangspegel und dem Sättigungs-Empfangspegels kalibriert

Bevorzugter Weise wird in der zweiten Schrittfolge, insbesondere nachdem der Betriebsstrom-Parameter neu berechnet und eingestellt / kalibriert worden ist, der aktuelle Empfangspegel überprüft; dazu wird geprüft, ob der aktuelle Empfangspegel (weiterhin) geringer als der minimale Empfangspegel ist, und falls dies der Fall ist, werden die Schwellenwerte (Entscheidungsschwellen) in Abhängigkeit des aktuellen Empfangspegels neu berechnet und eingestellt; oder andernfalls werden die bereits eingestellten Schwellenwerte, die anfänglich abhängig vom minimalen Empfangspegel eingestellt worden sind, weiter verwendet.

Vorzugsweise wird der untere Schwellenwert so eingestellt, dass der Bruchteil 30%-60%, insbesondere 50%, des minimalen Empfangspegels (bei der Anfangskalibrierung) bzw. 30%-60%, insbesondere 50%,des aktuellen Empfangspegels (bei einer Neukalibrierung) entspricht, und dass der obere Schwellenwert so eingestellt wird, dass der Bruchteil 60%-90%, insbesondere 70%, des minimalen Empfangspegels (bei der Erstkalibrierung) bzw. 60%-90%,insbesondere 70%, des aktuellen Empfangspegels (bei einer Neukalibrierung) entspricht. Außerdem wird der obere Schwellenwert vorzugsweise so eingestellt, dass er um mindestens 10%, insbesondere 20%, größer als der untere Schwellenwert ist. In dem später noch im Detail beschriebenen Ausführungsbeispiel wird der untere Schwellwert mit 50% berechnet und der obere mit 70% des Empfangspegels, und zwar entweder bezogen auf den min. Empfangspegel = minTargetValue (600digits) oder auf den aktuellen Empfangspegel = receiverValue. Je nachdem welcher Wert kleiner ist. Die Hysterese (Abstand zwischen den beiden Schwellenwerten) sollte vorzugsweise 20% sein. Damit ergeben sich die festen Schwellenwerte von 420/300 digits solange der Empfangspegel über minTargetValue ist. Danach wird der aktuelle Empfangspegel (receiverValue) zur Berechnung genutzt.

Für den Fall, dass der aktuellen Empfangspegel oberhalb des Sättigungs-Empfangspegels liegt, wird vorzugsweise der kalibrierte Parameter (z.B. der Betriebsstrom) für den optischen Senders sukzessive soweit reduziert, bis der aktuelle Empfangspegel am Empfänger unterhalb des vorgebbaren Sättigungs-Empfangspegels liegt. Dies kann durch Dekrementierung der Stromstufe erfolgen. In dem später noch im Detail beschriebenen Ausführungsbeispiel wird das Dekrementieren durch ein sukzessives Halbieren der Stromstufen vollzogen; diese Vorgehensweise ist einer binären Suche ähnlich und ist damit schneller und näher an der Realität. Die Ursache warum man in diesen Steuerungszweig hinein muss, liegt meist an einem zuvor geputzten Sensor, wodurch der Empfänger in einen übersättigten Zustand gerät. Es ist also für diesen Fall auch anzunehmen, dass von einer sehr hohen Stromstufe auf eine sehr niedrige geregelt werden muss. Ein herkömmliches (lineares)Dekrementieren dauert sehr lange (Die Laufzeit wächst linear gemäß O-Notation. d.h. mit O(n)). Das vorgeschlagene Halbieren ist mit deutlich kürzerer Laufzeit realisierbar (Die Laufzeit wächst gemäß O-Notation mit O(log(n)).

Bei dem Steuerungs- bzw. Regelungs-Verfahren wird vorzugsweise in der zweiten Schrittfolge auch geprüft, ob die Lichtschranke, insbesondere der optische Empfänger, abgedeckt ist. Dies wird geprüft, indem die Steigung (Gradient) einer für die Lichtschranke charakteristischen Kennlinie berechnet wird und geprüft wird, ob die Steigung geringer als ein minimaler Steigungswert ist. Falls dies nicht der Fall ist, wird in der zweiten Schrittfolge der Betrieb des optischen Senders so gesteuert, dass der Parameter (Betriebsstrom des optischen Senders) in Abhängigkeit des minimalen Empfangspegels und des Sättigungs-Empfangspegels sowie des Steigungswertes neu berechnet und eingestellt wird.

Mit der vorliegenden Erfindung wird eine Steuerung bzw. Regelung in Form einer Selbstjustage ermöglicht, bei der sich der Empfangspegel möglichst immer in einem optimalen Arbeitspunkt befindet, so dass weder eine Untersteuerung noch Übersteuerung eintritt. Die hier vorgeschlagene Lichtschrankenregelung kann auf mehrere Lichtschranken angewendet werden und für einen optimalen Arbeitspunkt aller regelbaren, analogen Lichtschranken sorgen. Dies gilt u.a. für Transportlichtschranken, Fachlichtschranken oder Freiraumlichtschranken. Jede Lichtschranke kann auch als Baueinheit bzw. Sensor bestehend aus einem Sender und einem Empfänger realisiert werden. Die Erfindung bringt insbesondere folgende Vorteile mit sich:

- o Betrieb mit einem möglichst geringen Sendestrom, um Energieverbrauch und Verschleiß an den Sendern zu minimieren;
- o Betrieb bei stets optimalem Empfangspegel, um freie Lichtschranken von verdeckten Lichtschranken klar unterscheiden zu können (auch unter Grenzbedingungen wie Fremdlicht oder mit dünnen Medien);
- o Automatische Kompensation bzw. Ausgleich von Verschmutzung, Verschleiß, Bauteil- und Montagetoleranzen;
- o Möglichkeit der Speicherung und Verwendung des eingeregelten Arbeitspunktes über Reboot und Power-Off hinweg;
- o Verwendung von geeigneten Initialeinstellungen bei der Erstinbetriebnahme (wenn noch kein eingeregelter Arbeitspunkt vorhanden).

Mit der vorliegenden Erfindung wird jede Lichtschranke optimale auf den minimal nötigen Sendestrom eingestellt. Dadurch erhöht sich die Lebensdauer des Senders und somit der jeweiligen Lichtschranke enorm. Auch wird hierdurch der Stromverbrauch möglichst gering gehalten, was insbesondere bei einer größeren Anzahl von angesteuerten Lichtschranken von Bedeutung ist.

Nachfolgend wird die Erfindung im Detail anhand von Ausführungsbeispielen und unter Bezugnahme auf die beiliegenden Zeichnungen beschrieben, welche die folgenden schematisch Darstellungen wiedergeben:

| | |
|---|---|
| Fig. 1 | zeigt ein vereinfachtes Flussdiagramm für ein erfindungsgemäßes Verfahren; |
| Fig. 2a | zeigt dazu näher im Detail eine erste Schrittfolge des Verfahrens; |
| Fig. 2b | zeigt dazu näher im Detail eine zweite Schrittfolge des Verfahrens; |
| Fig. 3a/b | veranschaulichen den Empfangspegelverlauf für verschiedene Lichtschrankenzustände; |
| Fig. 4 | zeigt ein Kennlinienfeld für den Empfangspegel in Abhängigkeit von verschiedenen Sendestromstufen und Zuständen der Lichtschranke; |
| Fig. 5 | zeigt ein Blockschaltbild für eine Lichtschranke mit einer erfindungsgemäßen Regelung; und |
| Fig. 6 | zeigt in Form eines Blockschaltbildes den Aufbau eines Selbstbedienungsterminals, das mit mehreren erfindungsgemäß geregelten Lichtschranken ausgestattet ist. |

Im Folgenden wird auf die Fig. 1-6 gemeinsam Bezug genommen, wobei zunächst insbesondere die Fig. 5 erläutert wird, die anhand eines Blockschaltbilds den Aufbau einer Lichtschranke zeigt, die mit einer erfindungsgemäßen Steuerschaltung bzw. Regelung verbunden ist.

Exemplarisch für mehrere Lichtschranken ist in der Fig. 5 eine Anordnung mit einer Lichtschranke 108 dargestellt. Die Lichtschranke enthält im Wesentlichen einen elektro-optischen Sender T und einen opto-elektrischen Empfänger R, der den vom Sender erzeugten Lichtstrahl L empfängt. Eventuelle sende- und empfängerseitig eingesetzte Optiken sind an sich bekannt und werden deshalb hier nicht dargestellt oder näher beschrieben. Als Sender T eignen sich beispielsweise Leuchtdioden (LED), insbesondere im Infrarotlichtbereich arbeitende IR-LEDs. Für besonders präzise Lichtschranken können z.B. auch Laserdioden verwendet werden. Als Empfänger R eignen sich beispielsweise Photodioden oder Phototransistoren oder in einfacheren Anwendungsfällen auch Fotowiderstände.

Wie die Fig. 5 zeigt, wird der Sender T beispielsweise über eine Treiberstufe DRV betrieben, die von einer Steuerschaltung 110 angesteuert wird. Insbesondere gibt die Steuerschaltung 110 als Steuerparameter eine veränderbare Stromstufe SC an, welche die Höhe des Betriebsstromes für den Sender T bestimmt. Somit können Sende-LEDs optimal, d.h. mit einem möglichst konstanten Strom auf der jeweilig eingestellten Stromstufe betrieben werden. Ein simpler Vorwiderstand würde nicht ausreichen, zumal auch die Versorgungsspannung nicht an allen LEDs exakt gleich ist. Die unterschiedlichen Spannungen können sich in einem Automaten oder Selbstbedienungsterminal schon aufgrund unterschiedlicher Kabellängen ergeben. Um dieses Problem zu vermeiden, werden die LEDs vorzugsweise mit Stromquellen betrieben. Hierzu kann ein integrierter Treiberbaustein eingesetzt werden, der den Strom in z.B. 127Stufen von Dunkel bis maximaler Helligkeit einstellen kann.

Auf der Empfängerseite ist dem Empfänger T ein Analog-Digital-Wandler CNV nachgeschaltet, der das von dem Empfänger R abgegebene Empfangssignal bzw. dessen Pegel RV von einem analogen Wert in einen digitalen Wert umwandelt und an die Steuerschaltung 110 liefert. Die Steuerschaltung 110 verarbeitet den Empfangspegel RV und entscheidet abhängig davon, ob und wie die Stromstufe SC zum Betrieb des Sender T verändert werden soll. In einer alternativen Ausführung kann eine Treiberstufe mehrere Sender T betreiben und eine kombinierte Analog-Digital-Wandler Stufe CNV kann Signale von mehreren Empfängern T verarbeiten.

Die nachfolgend noch näher beschriebene Anordnung eignet sich insbesondere, aber nicht ausschließlich, zum Einbau in Selbstbedienungsterminals, wie z.B. in Geldautomaten oder Kassensystemen, und kann auch mehrere Lichtschranken umfassen, die gemeinsam von einer Steuerschaltung überwacht werden. Eine erfindungsgemäße Ansteuerung ist überall dort denkbar, wo eine Kombination aus regelbarem optischen Sender (z.B. LED) und Empfänger (z.B. Phototransistor) als Lichtschranke genutzt wird.

Die Anordnung, insbesondere die Steuerschaltung 110, arbeitet nach dem erfindungsgemäßen Verfahren, das sich besonders gut anhand der Fig. 1 und Fig. 2a/b erläutern lässt:
Wie die Fig. 1 zeigt, ist das erfindungsgemäße Verfahren 1000 zur Steuerung mindestens einer solchen Lichtschranke (siehe 108 in Fig. 5) in zwei schematische Blöcke 1100 und 1200 unterteilt, von denen der erste Block 1100 eine erste Schrittfolge umfasst, in welcher anhand des aktuellen Empfangspegels (siehe auch RV in Fig. 5) geprüft wird, ob der Betrieb des Senders T mit veränderten Parametern gesteuert werden soll oder nicht. Insbesondere wird geprüft, ob ein Parameter für den Betrieb des optischen Senders kalibriert werden soll. In dem hier beschriebenen Beispiel wird als Parameter der Betriebsstrom bzw. die Stromstufe (siehe SC in Fig. 5) für den optischen Sender T gesteuert und ggf. neu kalibriert. Zunächst erfolgt die Entscheidung, ob der Parameter neu kalibriert wird innerhalb der ersten Schrittfolge bzw. dem Block 1100, welche( r) in der Fig. 2a näher im Detail dargestellt ist:
Ausgehend von einem Punkt P1, der den Zustand der anfänglich kalibrierten (z.B. werksseitig kalibrierten) Lichtschranken markiert, soll im Block 1100 pro Lichtschranke geprüft werden, ob die gegenwärtige Kalibrierung beibehalten wird oder ob eine neue Kalibrierung durchgeführt werden soll. Dazu wird in einem ersten Schritt 1110 für jede Lichtschranke der Empfangspegel RV auf der Empfängerseite gemessen. Im Schritt 1111 wird hierzu der Empfangspegel als Digitalwert aus dem A/D-Wandler CNV ausgelesen und dann wird im Schritt 1112 geprüft, ob der aktuelle Wert innerhalb eines zulässigen Bereichs liegt oder nicht. Befindet sich der aktuelle Empfangspegel RV außerhalb des zulässigen Bereichs, so springt das Verfahren zum Punkt P2 und führt eine neue Kalibrierung der Lichtschranke im Block 1200 aus (siehe auch Fig. 2b). Die Überprüfung erfolgt fortlaufend für alle vorhandenen Lichtschranken.

Der zulässige Empfangspegelbereich (siehe auch RNG in Fig. 3a) liegt zwischen einem Sättigungspegel SL, der die obere Grenze markiert, ab der der Empfänger in der Sättigung ist, und einem minimalen Empfangspegel TVm, der die untere Grenze für die vom Empfänger erzeugten, brauchbaren Empfangspegel markiert. Der aktuelle Empfangspegel TV sollte möglichst in der Mitte des Bereichs RNG liegen. Die Fig. 3a zeigt auch noch zwei Schwellenwerte, nämlich einen unteren Schwellenwert bzw. Grenzwert (THl), der z.B. 50% des minimalen Empfangspegels TVm beträgt, und einem oberen Schwellenwert bzw. Grenzwert (THh), der z.B. 70% des minimalen Empfangspegels TVm beträgt. Die Schwellenwerte definieren eine Hysterese HYS. Diese Grenzwerte werden später noch eingehender anhand der Fig. 3a/b erläutert. Zunächst soll hier der Block 1200 näher beschrieben werden, welcher in Fig. 2b im Detail dargestellt ist und welcher die Schritte zur eigentlichen Ansteuerung und Neu-Kalibrierung der Lichtschranke umfasst:
Ausgehend vom Punkt P2 wird in einer ersten Schrittfolge 1210 anhand des aktuellen Empfangspegels RV geprüft, ob der Empfänger R im Zustand der Sättigung befindet oder nicht (Schritt 1211). Als Kriterium dient ein vorgebbarer Sättigungspegel SL, mit dem der aktuelle Empfangspegels RV im Schritt 1212 verglichen wird. Falls RV größer SL ist, befindet sich der Empfänger in der Sättigung und es wird in einem Schritt 1213 die momentan verwendete Stromstufe SC, d.h. der hier betrachtete Betriebsparameter, reduziert. Das geschieht beispielsweise durch Halbieren der momentanen Stromstufe oder alternativ könnte dies durch Teilen der momentanen Stromstufe mit einem Teiler von 4, 8 oder Vielfachen davon erfolgen. Danach wird dann im Schritt 1214 der Empfangspegel RV erneut gemessen, um zu prüfen, ob sich der Empfänger immer noch in der Sättigung befindet. Die Reduzierung / Halbierung der Stromstufe SC wird sukzessive solange wiederholt, bis der reduzierte Empfangspegels RV unterhalb des Sättigungspegel SL liegt.

Ist dies der Fall, d.h. liegt keine Sättigung vor, dann wird die Lichtschranke innerhalb der nächsten Schrittfolge 1220 dahingehend geprüft, ob ihre Funktion durch Abdeckung des Lichtstrahles oder dergleichen beeinträchtigt ist. Dabei geht die Erfindung von der Erkenntnis aus, dass eine (auch teilweise) Abdeckung des Lichtstrahles oder eine Dämpfung des Lichtes sich auf der Empfangsseite feststellen lässt, indem ein Gradient einer für die Lichtschranke charakteristischen Kennlinie ermittelt und bewertet wird. Dieses Kriterium wird mit Bezug auf Fig. 4 hier beschrieben:
In der beispielhaften Fig. 4 sind mehrere Kennlinien in Form eines Kennlinienfeldes eingezeichnet, bei dem der Empfangspegel RV (Wertebereich von 0...1023) über den verwendeten Stromstufen SC (Wertebereich 0...127) aufgetragen wird. Die angegeben Werte beziehen sich auf digitale Einheiten (digits); für den Empfangspegel RV kann der höchste Wert von 1023 digits beispielsweise für einige Volt (V) stehen; für die Stromstufen SC kann der höchste Wert von 127 digits beispielsweise für einige Milli-Ampere (mA) stehen. Die Beziehung von digits zu den physikalischen Größen ist in Praxis nicht linear. Daher kann nicht gesagt werden, dass 1 digit beispielsweise 1 V oder 1 mA entspricht. Die physikalischen Größen sind für die Regelung bzw. Kalibrierung nicht relevant, da die Berechnung der Parameter (z.B. der Stromstufen) in digits erfolgt.

Im Allgemeinen steigt der Empfangspegel RV mit zunehmender Stromstufe SC an bis er einen Sättigungsbereich erreicht (Sättigungspegel bzw. -niveau etwa bei 900). Danach bleibt der Empfangspegel auf diesem Sättigungsniveau. Für eine freie, nicht abgedeckte oder gedämpfte Lichtschranke ist die mit Ziffer I markierte Kennlinie typisch, wonach der Empfangspegel RV zunächst steil mit einer linearen Steigung bis nahe dem Sättigungsniveau ansteigt. In derbeispielhaften Fig. 4 steigt im unteren Stromstufenbereich von 0 bis 14 (digits) der Empfangspegel RV von 0 bis ca. 900 (digits) an. Dann geht RV in einem Übergangsbereich (14 < SC < 17) über in die Sättigung bei etwa 900 und verbleibt auf diesem Niveau. Die Steigung von RV im Eingangsbereich der Kennlinie I wird hier mit gradI bezeichnet und beträgt beispielsweise im Arbeitspunkt ( 781 - 0 ) / ( 11 - 0 ) = 71.

Wie die beispielhafte Fig. 4 zeigt, steigt der Empfangspegel RV bei abgeschwächter Lichtschranke (Kennlinie II) deutlich schwächer an (gradII), der Gradient im Arbeitspunkt ist hier ( 752 - 0 ) / ( 89 - 0 ) = 82,45. Bei abgedeckter Lichtschranke steigt RV kaum noch an und der Gradient ist deutlich unter eins. Wenn nun die Steigung des Empfangspegels RV nicht ausreichend groß ist, sondern unter einem vorgebbaren minimalem Steigungswert (milliGradientCovered = 1) liegt, dann wird dies als Anzeichen für eine (teilweise) Abdeckung der Lichtschranke erkannt. Die weitere Steuerung und/oder Kalibrierung der Lichtschranke kann ausbleiben (siehe Schritt 1223 in Fig. 2b).

Wir nehmen wieder Bezug auf die Fig. 2b und die dortige Schrittfolge 1220, in welcher die Prüfung durchgeführt wird, ob die Lichtschranke abgedeckt ist oder nicht:
Zunächst wird in einem Schritt 1221 der Gradient des Empfangspegels RV im aktuellen Arbeitspunkt berechnet. Dazu kann folgende Formel benutzt werden:

$$\text{grad} = RV * w / SC$$

Siehe z.B. gradI in Fig. 4, wo der Gradient sich im aktuellen Arbeitspunkt berechnet aus dem Quotienten RV = 781 / SC = 11 und demnach den Wert 71 hat). Zwecks Erhöhung der Auflösung der Berechnung wird w = 1000 angenommen. Dadurch kann ein MikroController mit Integer Berechnung auskommen (Performance).

Als nächstes wird im Schritt 1222 der aktuell berechnete Gradient mit dem vorgebbaren minimalem Steigungswert milliGradientCovered verglichen. Liegt der aktuelle Gradient (z.B. III in Fig. 4) darunter, so wird angenommen, dass die Lichtschranke abgedeckt ist und es wird keine weitere Kalibrierung der Lichtschranke durchgeführt (Schritt 1223). Zusätzlich oder alternativ dazu kann auch geprüft werden, ob der Empfangspegel RV kleiner als ein vorgebbarer minimaler bzw. kritischer Empfangspegel criticalCoveredValue ist. Wenn allerdings der berechnete Gradient größer als der Wert milliGradientCovered ist und/oder wenn der aktuelle Empfangspegel größer als der Wert criticalCoveredValue ist, so geht das System davon aus, dass keine Abdeckung der Lichtschranke vorliegt und das Verfahren geht weiter zum Schritt 1231 zum Einstellen der Stromstufe.

Die Stromstufe SC wird also in der Schrittfolge 1230 eingestellt und zwar in den Schritten 1231 und 1232. Im ersten Schritt wird ein Zielwert TC (TargetCurrent) für die Stromstufe berechnet. Dazu wird folgende Formel benutzt:

$$TC = \text{TargetCurrent} = \{ TVm + (SL - TVm) / 2 \} * w / \text{grad}$$

Der Zielwert TC ist demnach abhängig von dem minimalen Empfangspegel TVm und dem Sättigungspegel SL sowie von der gemessenen Steigung grad. Die Formel spiegelt eine Extrapolation der Steigung im aktuellen Arbeitspunkt wieder, anhand derer der Zielwert für die Stromstufe berechnet wird. Dann wird im Schritt 1232 die Stromstufe entsprechend dem errechneten Zielwert TC eingestellt. Das vornehmliche Ziel der Regelung ist es, mit dem Zielwert möglichst mittig in dem Bereich RNG zu liegen (s. Fig. 3a), um den maximalen Abstand zum Sättigungswert SL und den maximalen Abstand zum Mindestempfangspegel TVm zu haben.

Das Verfahren geht dann mit der Schrittfolge 1240 weiter, in welcher der tatsächlich erreichte Empfangspegel RV (nochmals) geprüft wird, um zu entscheiden, ob die Steuerung der Lichtschranke anhand der bestehenden Schwellenwerte erfolgt oder neue Schwellenwerte dafür berechnet werden sollen:

Im Schritt 1241 wird zunächst der neue Empfangspegel RV ermittelt; dann wird dieser im Schritt 1242 mit dem minimalen Empfangspegel TVm verglichen. Ist der Empfangspegel RV mindestens so groß oder größer als der minimale Empfangspegel TVm so können die bisherigen Schwellenwerte weiter verwendet werden (Schritt 1245). Ansonsten werden die Schwellenwerte neu berechnet (Schritt 1244).

Ist also der aktuelle Empfangspegel zu gering (RV <TVm), dann erfolgt eine neue Kalibrierung durch Ändern der folgenden Schwellenwerte: Einem oberen Schwellenwert THh und einem unteren Schwellenwert THl. Beide Schwellenwerte sind abhängig von dem Empfangspegel; sie entsprechen einem Bruchteil des Empfangspegels. Dabei ist zu beachten, dass bei einer ersten Einstellung des Systems (Erstkalibrierung, z.B. werkseitig) die Schwellenwerte jeweils einem Bruchteil des minimalen Empfangspegels TVm entsprechen. Erfolgt jedoch eine Neu-Kalibrierung (Schritt 1244), so werden die Schwellenwerte jeweils als Bruchteil des aktuellen Empfangspegels RV berechnet; der aktuelle Empfangspegel RV tritt also an die Stelle des minimalen Empfangspegels TVm. Beispielsweise beträgt der untere Schwellenwert THl etwa 50% von TVm bzw. von RV. Und der obere Schwellenwert THh beträgt etwa 70% von TVm bzw. von RV. Die Prozentwerte 50% und 70% sind bevorzugte Werte, die bei nahezu allen Lichtschranken zum Einsatz kommen. Theoretisch wäre eine Drittelung ideal, um einen maximalen Störabstand und eine maximale Hysterese zu bekommen. Da in der Praxis jedoch der Empfangspegel elektrisch nie exakt 0V beträgt und ein Medium (insbesondere ein dünnes Medium) nie zu 100% Licht absorbieren kann (siehe auch Kennlinien III in Fig. 4),sollte nach unten ein größerer Störabstand gewährt werden. Daher werden hier, anstelle der theoretischen Ideal-Prozentwerte 33% und 66%, die Prozentwerte 50% und 70% genommen. Es wird sichergestellt, dass THh immer mindestens 10% größer als THl ist.

Was es mit den Schwellenwerten THh und THh auf sich hat, wird insbesondere anhand der Fig. 3a/b deutlich: Die Fig. 3a zeigt den Verlauf des Empfangspegels RV, der sich möglichst nur innerhalb des zulässigen Bereichs RNG ändern sollte. Sinkt der Empfangspegel RV unterhalb des unteren Schwellenwertes THl, so kann man davon ausgehen, dass die Lichtschranke nicht frei ist bzw. dass der Empfänger verdeckt ist. Steigt dann der Empfangspegel RV wieder und zwar oberhalb des oberen Schwellenwertes THh, dann kann man davon ausgehen, dass die Lichtschranke wieder frei ist. Die Schwellenwerte definieren eine Hysterese HYS. Somit kann bei einer vollfunktionsfähigen Lichtschranke mit Hilfe der Hysterese HYS sicher erkannt werden, ob ein Objekt den Lichtstrahl unterbricht oder nicht (mehr). Dadurch könnten auch bewegte Objekte (transportierte Geldscheine) zuverlässig erkannt werden. Dies wird durch die Fig. 3a veranschaulicht.

Wird aber die Lichtschranken-Funktion durch Verschmutzung, Alterung usw. beeinflusst, kann der Fall eintreten, dass der Empfangspegel RV niemals deutlich über dem oberen Schwellenwert THh liegt. Dies wird anhand der Fig. 3b veranschaulicht: Obwohl die Lichtschranke nicht unterbrochen ist, also frei sein sollte, erreicht der Empfangspegel RV ein Niveau, das nur wenig oder kaum oberhalb von THh liegt. Kommt nun das beobachtete Objekt in den Bereich des Lichtstrahles, so sinkt der Empfangspegel RV zwar auch unterhalb des unteren Schwellenwertes THl und es kann auf "Lichtschranke unterbrochen" erkannt werden. Verlässt das Objekt dann wieder den Bereich des Lichtstrahls, so steigt zwar der Empfangspegel RV an; er kann aber aufgrund der Verschmutzung / Abdeckung den oberen Schwellenwert THh nicht deutlich genug überschreiten. Somit kann das System den Zustand "Lichtschranke (wieder) frei" nicht zuverlässig erkennen.

Die vorliegende Erfindung löst auch dieses Problem, indem die Schwellenwerte THl und THh gegebenenfalls neu eingestellt werden (siehe Schritt 1244 in Fig. 2b). Das System arbeitet also auch bei auftretender Verschmutzung zuverlässig, soweit dies noch möglich ist. Wenn allerdings die Lichtschranke sehr stark verschmutzt ist oder vollkommen abgedeckt ist, wird dies in der Schrittfolge 1220 festgestellt und es wird auf eine Kalibrierung verzichtet. In diesem Fall (Schritt 1223) kann sogar die ganze Steuerung solange deaktiviert werden, bis das System durch Wartung wieder voll funktionsfähig gemacht worden ist.

Bei einer mäßigen Verschmutzung kann jedoch das System durch die Selbstjustage (Schrittfolge 1240) der Schwellenwerte THh und THl immer zuverlässig arbeiten. Dabei wird nicht nur eine aufkommende Verschmutzung kompensiert, indem die Schwellenwerte abhängig vom aktuellen Empfangspegel (etwas) abgesenkt werden. Auch auf eine evtl. wieder verschwindende Störung (Beschlag der Optik mit Feuchtigkeit) reagiert das System selbstständig, indem dann der Sendestrom wieder gesenkt wird und evtl.die Schwellenwerte wieder angehoben werden.

Die nach dem Verfahren arbeitende Steuerschaltung (siehe 110 in Fig. 5) kann zur Steuerung bzw. Regelung von einer oder auch mehrerer Lichtschranken verwendet werden, insbesondere innerhalb von Automaten und Selbstbedienungsterminals wie Geldautomaten oder Kassensystemen. Es sei hier hervorgehoben, dass die Steuerung durch eine dedizierte Hardware (HW), durch eine dedizierte Software (SW) oder auch durch eine HW/SW-Kombination realisiert werden kann.

Die Lichtschrankenregelung sorgt für einen optimalen Arbeitspunkt aller regelbaren Lichtschranken. Hierzu zählen Transport-Lichtschranken, Fachlichtschranken oder Freiraum-Lichtschranken. Die Sensoren bestehen vorzugsweise aus einem Sender und einem Empfänger. Mit der Regelung werden u.a. folgende Vorteile erreicht: möglichst geringer Sendestrom, um Energieverbrauch und Verschleiß an den Sendern zu minimieren; optimaler Empfangspegel, um freie Lichtschranken von verdeckten Lichtschranken klar unterscheiden zu können (auch unter Grenzbedingungen wie Fremdlicht oder mit dünnen Medien); Ausgleich von Verschmutzung, Verschleiß, Bauteil- und Montagetoleranzen; Speicherung und Verwendung des eingeregelten Arbeitspunktes über Reboot und Power-Off hinweg; Verwendung von geeigneten Initialeinstellungen bei der Erstinbetriebnahme (noch kein eingeregelter Arbeitspunkt vorhanden).

Im Sender wird als Lichtquelle vorzugsweise eine Infrarot-Diode eingesetzt. Ihre Intensität kann in Stufen eingestellt werden. In den meisten Anwendungsfällen kann ein LED-Treiberbaustein mit 7-bit Auflösung (128 Stromstufen) eingesetzt werden; einige Lichtschranken sind diskret mit Transistor Stufen aufgebaut und haben weniger Stromstufen (2, 4, 8). In Stufe 0 ist der Sender ausgeschaltet, es fließt kein Strom und kein Licht wird emittiert.

Der Empfänger ist beispielsweise ein Infrarot Phototransistor; er liefert eine Spannung an den AD-Wandler des Mikrokontrollers; dieser verfügt in einer beispielhaften Ausführungsformüber einen 10-bit AD-Wandler (0... 1023 digits). Das System ist so eingestellt, dass die freie Lichtschranke einen Empfangspegel RV am oberen Ende des Wertebereichs hat, und zwar oberhalb von 600 digits (THh). Die verdeckte Lichtschranke liefert einen Empfangspegel RV deutlich unter THl, meist nahe 0 digits.

Folgende Randbedingungen werden berücksichtigt: Für den Einsatz der Erfindung bei einer Analoglichtschranke werden analoge Messwerte in Digitalsignale (FREE/COVERED) gewandelt. Dies geschieht anhand von Schwellen. Damit das Digitalsignal bei leicht schwankenden Analogpegeln nicht ständig hin und her springt, wird eine Hysterese (siehe HYS in Fig. 3a) verwendet. Die Schwellen THh und THl werden nun so eingestellt, dass der Pegel RV, den ein Medium erzeugt, die untere Schwelle THl sauber/klar unterschreitet und bei einem nicht vorhandenen Medium die obere Schwelle THh sauber/klar überschreitet. Gleichzeitig darf der Abstand dieser Schwellen, die Hysterese HYS, nicht zu klein werden. Ist der Pegel einer freien Lichtschranke hinreichend hoch und sind die Schwellen korrekt gewählt, ist eine zuverlässige Funktion sichergestellt (Fig. 3a).Mit steigender Verschmutzung sinkt der Empfangspegel RV am Empfänger. Irgendwann wird die obere Schwelle THh nicht mehr überschritten. Der Sensor wäre dauerhaft verdeckt.

Die hier offenbarte Lichtschrankenregelung überwindet jedoch dieses Problem und wirkt ihm durch Nachregeln entgegen, wodurch der Sendestrom erhöht werden kann. Dadurch wird der abfallende Pegel RV am Empfänger wieder erhöht. Allerdings darf eine Nachregelung nicht beliebig erfolgen. Es sind einige Randbedingungen zu beachten:

o Shutter/System geöffnet. Einfallendes Fremdlicht kann die Regelung stören

o Stau an ein oder mehreren Lichtschranken verdecken diese

o eine definierte Zeitspanne oder Anzahl an Transaktionen ist verstrichen und man kann von Verschmutzung ausgehen

Es sei hier noch angemerkt, dass hierzu noch weitere Implementierungsdetails dankbar sind, welche bestimmen, wie die Randbedingungen erfasst und verarbeitet werden können. Insgesamt jedoch versucht die Regelung möglichst immer selbstständig zu erkennen, ob nachgeregelt werden darf oder nicht (z.B. im Fall "Lichtschranke verdeckt"). Für solche Situationen, in denen eine Regelung eher unangebracht wäre, ist eine Instanz über der Steuerung vorgesehen, welche die Steuerung deaktivieren kann. Um nun zu erkennen, ob man sich in so einer solchen Situation befindet oder nicht, können entsprechende Instanzen vorgesehen sein, wie z.B. Digital Lichtschranken, die den Shutter überwachen oder eine Instanz zur Stau-Erkennung durch Messen von Überstrom an den Motoren.

Das hier vorgestellte Funktionsprinzip verfolgt das Ziel, den Empfangspegel RV im Arbeitsbereich von TVm = minTargetValue (default 600 digits) und SL = saturationLimit (default 900 digits) zu halten. Die Hysterese HYS wird dann fest auf TVm (minTargetValue) bezogen eingestellt. Der Default ist THl (lowThreshold) = 50% von TVm (minTargetValue) und THh (highThreshold)= 70% von TVm (minTargetValue). Ist der Zielbereich unterschritten, so liegt vermutlich Verschmutzung vor; durch Erhöhung des Sendestromes soll der Empfangspegel wieder in den Zielbereich gelangen. Ist der Zielbereich überschritten (Empfänger in Sättigung) wurde eine vorher verschmutze Lichtschranke vermutlich gereinigt. Der Strom kann wieder abgesenkt werden um den Verschleiß des Senders zu minimieren.

Das Diagramm in Fig. 4 zeigt die Kennlinien einer Lichtschranke bei drei provozierten Verschmutzungsgraden I, II und III (sauber, verschmutzt, unbrauchbar), die Rauten stellen Messwerte bei den jeweiligen Stromstufen dar. Zusätzlich sind alle im Algorithmus relevanten Grenzen/Parameter eingezeichnet. Diese sind der Zielbereich von TVm (minTargetValue) bis SL (saturationLimit) anhand der durchgezogenen Linien. Die gepunktete Linie in der Mitte ist der ideale achivedReceiverValue der während einer Regelung versucht wird zu erreichen. Die gestrichelten Linien zeigen die Schwellenwerte THh und THl (upper- und lowerThreshold). Die Strichpunkt Linien Stellen den Übergang zum verdeckten Bereich dar. Diese Grenze ist einerseits criticalCoveredValue (default 50) als absoluter Wert und milliGradient-Covered (default 1000) als Steigung der Kennlinie.

Der Algorithmus errechnet stets die Steigung (grad) der aktuellen Kennlinie. So kann die Stromstufe SC zum Erreichen des Zielbereichs direkt errechnet werden ohne die Stromstufen linear durchprobieren zu müssen. Dies spart enorm Zeit. Die Abschätzung ist absichtlich linear approximiert um den Rechenaufwand zu reduzieren. Die Kennlinien werden erst mit zunehmender Verschmutzung stark polynomisch. Zudem generiert der Sender am oberen Ende immer weniger Lichtzuwachs pro Stromstufe. Daher ist eine präzise Bestimmung der Stromstufe nicht funktionsrelevant.

Zusätzlich wird die Steigung (grad) dazu verwendet, um zu erkennen, ob der Sensor während der Regelung verdeckt ist. Das ist dann der Fall, wenn die Steigung kleiner ist als milliGradientCovered. Dies wurde für dedizierte Lichtschranken durch Messungen empirisch ermittelt. Da die Auflösung der Stromstufen als auch des Empfangspegels jeweils im unteren Bereich gering ist, ergeben sich beim Berechnen der Steigung schnell große Sprünge. Daher soll zusätzlich bei geringen Stromstufen durch die absolute Schranke criticalCoveredValue eine Verdeckung erkannt werden. Bei verdecktem Sensor wird nicht geregelt.

Um die Steigung (grad) korrekt berechnen zu können, darf der Empfangspegel RV nicht in Sättigung sein. Dies ist z.B. dann der Fall, wenn der Sensor gerade gereinigt wurde. Der Sendestrom SC ist noch sehr hoch und kommt ungehindert am Empfänger an. Der Pegel befindet sich außerhalb des messbaren Bereichs in Sättigung. Um den Empfangspegel wieder in den linearen Bereich zu bekommen muss der Sendestrom wieder abgesenkt werden. Die korrekte Stromstufe SC kann hier nicht abgeschätzt oder errechnet werden. Um auch hier nicht linear suchen zu müssen, wird ein binäres Verfahren eingesetzt. Es ist anzunehmen, dass eher viel als wenig Stromänderung nötig ist, um einen geeigneten Empfangspegel zu bekommen. Der Sendestrom wird durch ständiges halbieren so lange abgeschwächt, bis der Empfangspegel unter SL (saturationLimit) gesunken ist. Danach kann die Steigung wieder korrekt berechnet werden.

Wird selbst mit maximaler Stromstufe der Empfangspegel TVm (minTargetValue) nicht erreicht, müssen die Schwellenwerte angepasst werden, um den Sensor noch im Grenzbereich starker Verschmutzung nutzen zu können. Dazu wird der THl und THh (lower- und upperThresholds) anhand des aktuellen Empfangspegels RV eingestellt anstatt fest auf TVm (minTargetValue) bezogen zu sein. Fällt der THl (lowerThreshold) unter criticalCoveredValue verschwimmen die Grenzen zwischen Verschmutzung und Abdunkelung durch ein Medium. Der Sensor wird in diesem Bereich höchstwahrscheinlich false-positive Staus melden.

Die hier offenbarte Lichtschranke arbeitet im Wesentlichen mit zwei Schwellenwerten, die eine Hysterse HYS definieren, nämlich mit einer unteren Schwelle THl (lowerThreshold) und einer oberen Schwelle THh (upperThreshold). Diese Schwellen werden ausgehend von einem minimalen Empfangspegel TVm (minTargetValue) (=600 digits) berechnet, und zwar TH1= 50% TVm=300 digits und THh = 70% TVm = 420 digits. Das System sorgt dafür, dass der Arbeitsbereich für den Empfangspegel RV möglichst immer über TVm(600 digits) liegt und den Sättigungswert SL (SaturationLimit = 900 digits) nicht übersteigt.

Zusammenfassend kann das hier vorgeschlagene Regelungs-Verfahren auf der Senderseite (IR-Diode) den Sendestrom intelligent nachregeln, beispielhaft kann dies stufenförmig in definierten Stromstufen (2, 4 ,8, ...) erfolgen. Somit stellt sich auf der Empfängerseite (IR-Sensor/Phototransistor) der Empfangspegel möglichst immer in einem optimalen Arbeitspunkt ein.

Die Erfindung kann in der Firmware eines Selbstbedienungsterminals (kurz auch SB-Terminal genannt) wie z.B. in Geldautomaten oder Kassensystemen realisiert werden, so wie es schematisch in der Fig. 6 dargestellt ist: Das SB-Terminal ist als Geldautomat 100 ausgeführt und weist insbesondere die folgenden Komponenten auf:
Eine Karteneingabevorrichtung 12; eine Benutzerschnittstelle 14; mehrere Geldkassetten 102 und eine Eingabe- und/oder Ausgabeeinheit 104. Zudem befindet sich ein Transportpfad 106 zwischen den einzelnen Geldkassetten 102 und der Eingabe- und/oder Ausgabeeinheit 104, um somit die Banknoten innerhalb des Geldautomaten sicher und schnell zu transportieren. Zur Überwachung des Banknoten-Transports sind mehrere Lichtschranken 108 installiert. In dem hier gezeigten Bespiel sind jeweils zwei oder drei Lichtschranken gruppenweise mit einer Steuerschaltung 110 verbunden, die nach dem hier beschriebenen Steuerungs- und Regelungsverfahren arbeiten und die Lichtschranken bedarfsweise kalibrieren. In dem hier gezeigten Bespiel sind insgesamt drei Steuerschaltungen 110 vorgesehen, die jeweils als Slave-Controller hinsichtlich einer Hauptsteuereinheit 112 dienen, welche hier als MasterController/PC des SB-Terminals dient.

Der jeweilige Slave-Controller 110 mit Treiber und AD-Wandler und Mikrocontroller dient zur hardware-nahen Auswertung der Signal und Wandlung in Events. Der MasterController112 dient zur Auswertung der vom Slave-Controller kommenden Events und zur Steuerung der Kalibrierung. Der PC selbst dient insbesondere zur Visualisierung der Zustände (wie z.B. "Verschmutzung") und ermöglicht manuelle Eingriffe in die Steuerung (z.B. manuell veranlasstes Kalibrieren nach Putzen der Lichtschranke(n)). Die in Fig. 6 aufgezeigte Struktur gibt lediglich eine beispielhafte Architektur wieder, mit welcher die anhand der Fig. 5 erläuterten Funktionen und Zusammenhänge realisiert werden können.

Die Regelung arbeitet schnell und zuverlässig. Dabei werden folgende Regelungs-Prinzipien beachtet bzw. umgesetzt:

◦ Der Algorithmus errechnet die Steigung der aktuellen Kennlinie (Empfangspegel über Stromstufe). Daraus kann dann die benötigte Stromstufe für den Zielbereich (Arbeitspunkt im Arbeitsbereich) ermittelt werden.

◦ Anhand der Steigung wird auch erkannt, ob der Sensor (Empfänger) verdeckt ist. Dies ist der Fall, wenn die Steigung kleiner ist als ein definierter Wert "milliGradientCovered". Bei geringer Stromstufe kann dies zusätzlich noch anhand einer unteren Schranke "criticalCoveredValue" überprüft werden. Ist der Sensor verdeckt, so wird keine Regelung durchgeführt.

◦ Vor Berechung der Steigung (s. I) wird geprüft, ob der Empfangspegel in der Sättigung ist (>SaturationLimit). In diesem Fall wird der Sendestrom abgesenkt und zwar durch iteratives Halbieren, so lange, bis der Empfangspegel wieder kleiner als der Sättigungswert "SaturationLimit" ist.

◦ Es wird auch festgestellt, wenn trotz max. Stromstufe der minimale Empfangspegel "minTargetValue" nicht mehr erreicht wird. Der Sensor befindet sich dann im Grenzbereich starker Verschmutzung. In diesem Fall werden die Schwellenwerte "lowerThreshold" und "upperThreshold" (s. Arbeitsweise (O)) angepasst, indem diese nicht mehr in Relation zu "minTargetValue" definiert werden (50% bzw. 70%), sondern anhand des aktuellen Empfangspegels eingestellt werden. Hierdurch wird versucht die Funktion der Lichtschranke auch bei starker Verschmutzung noch aufrecht zu erhalten.

## Patentansprüche

1. Verfahren (1000) zur Steuerung mindestens einer Lichtschranke (108), wobei von einem optischen Sender (T) Licht (L) an einen optischen Empfänger (R) ausgesendet wird, wobei in Abhängigkeit von dem empfangenen Licht (L) ein aktueller Empfangspegel (RV) ermittelt wird, und wobei mittels einer Steuerschaltung (110) geprüft wird, ob der aktuelle Empfangspegel (RV) einen unteren Schwellenwert (THl) unterschreitet oder einen oberen Schwellenwert (THh) überschreitet, um festzustellen, ob die Lichtschranke (108) unterbrochen ist oder nicht,
**dadurch gekennzeichnet, dass**
die Schwellenwerte (THl; THh) zunächst abhängig von einem vorgebbaren minimalen Empfangspegel (TVm), der eine untere Grenze für die von dem Empfänger (R ) erzeugten brauchbaren Empfangspegel markiert, so eingestellt werden, dass die Schwellenwerte (THl; THh) jeweils einem Bruchteil des minimalen Empfangspegels (TVm) entsprechen, wobei zwischen dem minimalen Empfangspegel (TVm) und einem vorgebbaren Sättigungs-Empfangspegel (SL) ein zulässiger Empfangspegelbereich (RNG) definiert wird, und wobei in einer ersten Schrittfolge (1100) geprüft wird, ob der aktuelle Empfangspegel (RV) außerhalb dieses zulässigen Empfangspegelbereichs (RNG) liegt (Schritt 1112), und falls dies der Fall ist, in einer zweiten Schrittfolge (1200) zumindest ein Parameter (SC) für den Betrieb des optischen Senders (T) in Abhängigkeit von dem minimalen Empfangspegel (TVm) und/oder dem Sättigungs-Empfangspegels (SL) kalibriert wird (1232), wobei der Parameter (SC) kalibriert wird, indem eine Steigung (grad; gradI) einer für die Lichtschranke (108) charakteristischen Kennlinie (I) berechnet wird (1221) und wobei der Parameter (SC) auf einen Zielwert (TC) neu eingestellt wird, der in Abhängigkeit von der Steigung (gradI) berechnet wird (Schritte 1231, 1232).

2. Verfahren (1000) nach Anspruch 1, **dadurch gekennzeichnet, dass** in der zweiten Schrittfolge (1200), insbesondere nachdem der Parameter (SC) neu berechnet und eingestellt worden ist (Schritte 1231, 1232), insbesondere wobei der Parameter (SC) den Betriebstrom für den optischen Senders (T) angibt, auch der aktuelle Empfangspegel (RV) geprüft wird (Block 1240), und zwar ob der aktuelle Empfangspegel (RV) geringer als der minimale Empfangspegel (TVm) ist (Schritt 1242), und falls dies der Fall ist, die Schwellenwerte (THl; THh) in Abhängigkeit des aktuellen Empfangspegels (RV) neu berechnet und eingestellt werden (Schritte 1244, 1245) oder andernfalls, die bereits eingestellten Schwellenwerte (THl; THh) weiter verwendet werden (Schritte 1243, 1245).

3. Verfahren (1000) nach Anspruch 2, **dadurch gekennzeichnet, dass** die neu eingestellten Schwellenwerte (THl; THh) jeweils einem Bruchteil des aktuellen Empfangspegels (RV) entsprechen.

4. Verfahren (1000) nach einem der vorhergehenden Ansprüche, **dadurch gekennzeichnet, dass** der untere Schwellenwert (THl) so eingestellt wird, dass der Bruchteil 30%-60%, insbesondere 50%, des minimalen Empfangspegels (TVm) bzw. des aktuellen Empfangspegels (RV) entspricht, und dass der obere Schwellenwert (THh) so eingestellt wird, dass der Bruchteil 60%-90%, insbesondere 70%, des minimalen Empfangspegels (TVm) bzw. des aktuellen Empfangspegels (RV) entspricht.

5. Verfahren (1000) nach einem der vorhergehenden Ansprüche, **dadurch gekennzeichnet, dass** der obere Schwellenwert (THh) so eingestellt wird, dass er um mindestens 10%, insbesondere 20%, größer als der untere Schwellenwert (THl) ist.

6. Verfahren (1000) nach einem der vorhergehenden Ansprüche, **dadurch gekennzeichnet, dass** für den Fall, dass der aktuellen Empfangspegel (RV) oberhalb des Sättigungs-Empfangspegels (SL) liegt (Schritt 1212), der kalibrierte Parameter (SC) sukzessive soweit reduziert wird (Schritte 1213, 1214), bis der aktuelle Empfangspegel (RV) am Empfänger (R) unterhalb des vorgebbaren Sättigungs-Empfangspegels (SL) liegt, insbesondere wobei der Parameter (SC) den Betriebstrom für den optischen Senders (T) angibt.

7. Verfahren (1000) nach einem der vorhergehenden Ansprüche, **dadurch gekennzeichnet, dass** der Parameter (SC) den Betriebsstrom, insbesondere eine Stromstufe (SC), für den optischen Senders (T) angibt.

8. Verfahren (1000) nach Anspruch 7 **dadurch gekennzeichnet, dass** die Steigung (grad) unter der Annahme berechnet wird, dass die jeweilige Kennlinie (I, II, III) vom Nullpunkt ausgehend zunächst linear verläuft, so dass die Steigung (grad) gemäß der folgenden Formel berechnet wird (1221):

$$grad = RV * w / SC,$$

wobei RV der aktuelle Empfangspegel und w ein Wichtungsfaktor sowie SC der eingestellte Parameter ist, der insbesondere den Betriebsstrom, insbesondere die Stromstufe (SC), für den optischen Senders (T) angibt.

9. Verfahren (1000) nach Anspruch 7, **dadurch gekennzeichnet, dass** der Zielwert (TC) für den Parameter (SC) gemäß der folgenden Formel berechnet wird (1231):

$$TC = \{ TVm + (SL - TVm) / 2 \} * w / grad ,$$

wobei TVm der minimalen Empfangspegel; SL der Sättigungs-Empfangspegel; w ein Wichtungsfaktor sowie grad die berechnete Steigung ist.

10. Verfahren (1000) nach einem der Ansprüche 7-9, **dadurch gekennzeichnet, dass** in der zweiten Schrittfolge (1200) auch geprüft wird, ob die Lichtschranke (108), insbesondere der optische Empfänger (R), abgedeckt ist (Block 1220), indem geprüft wird, ob die berechnete Steigung (gradI) geringer als ein minimaler Steigungswert (milliGradientCovered) ist, und falls dies der Fall ist, in der zweiten Schrittfolge (1200) der Parameter (SC) für den Betrieb des optischen Senders (T) nicht kalibriert wird, oder andernfalls der Parameter (SC), der insbesondere den Betriebsstrom, insbesondere die Stromstufe (SC), für den optischen Senders (T) angibt, in Abhängigkeit des minimalen Empfangspegels (TVm) und des Sättigungs-Empfangspegels (SL) sowie der berechneten Steigung (gradI) neu berechnet und eingestellt wird (Schritte 1231, 1232).

11. Steuerschaltung (110) zur Steuerung mindestens einer Lichtschranke (108), wobei ein optischen Sender (T) Licht (L) an einen optischen Empfänger (R) aussendet, wobei die Steuerschaltung (110) mit dem Empfänger (R) oder einer diesem nachgeschalteten Wandlerstufe (CNV) verbunden ist und einen von dem empfangenen Licht (L) abhängigen aktuellen Empfangspegel (RV) ermittelt, und wobei die Steuerschaltung (110) prüft, ob der aktuelle Empfangspegel (RV) einen unteren Schwellenwert (THl) unterschreitet oder einen oberen Schwellenwert (THh) überschreitet, um festzustellen, ob die Lichtschranke (108) unterbrochen ist oder nicht, **dadurch gekennzeichnet, dass**
die Steuerschaltung (110) mit dem optischen Sender (T) oder einer diesem vorgeschalteten Treiberstufe (DRV) verbunden ist und den Betrieb des optischen Senders (T) steuert, wobei die Steuerschaltung (110) die Schwellenwerte (THl; THh) zunächst abhängig von einem vorgebbaren minimalen Empfangspegel (TVm), der eine untere Grenze für die von dem Empfänger (R) erzeugten brauchbaren Empfangspegel markiert, so eingestellt, dass die Schwellenwerte (THl; THh) jeweils einem Bruchteil des minimalen Empfangspegels (TVm) entsprechen, wobei zwischen dem minimalen Empfangspegel (TVm) und einem vorgebbaren Sättigungs-Empfangspegel (SL) ein zulässiger Empfangspegelbereich (RNG) definiert ist, und wobei die Steuerschaltung (110) in einer ersten Schrittfolge (1100) prüft, ob der aktuelle Empfangspegel (RV) außerhalb dieses zulässigen Empfangspegelbereichs (RNG) liegt (Schritt 1112), und falls dies der Fall ist, in einer zweiten Schrittfolge (1200) zumindest einen Parameter (SC) für den Betrieb des optischen Senders (T) in Abhängigkeit von dem minimalen Empfangspegel (TVm) und/oder dem Sättigungs-Empfangspegels (SL) kalibriert (1232), wobei die Steuerschaltung (110) den Parameter (SC) kalibriert, indem die Steuerschaltung (110) eine Steigung (grad; gradI) einer für die Lichtschranke (108) charakteristischen Kennlinie (I) berechnet (1221) und den Parameter (SC) auf einen Zielwert (TC) neu einstellt, den die Steuerschaltung (110) in Abhängigkeit von der Steigung (gradI) berechnet (Schritte 1231, 1232).

**12.** Steuerschaltung nach Anspruch 11, **dadurch gekennzeichnet, dass** die Steuerschaltung in mindestens einer Steuereinheit (110, 112) realisiert ist, insbesondere in mindestens einem Slave-Controller (110), der mit einer oder mehrerer der Lichtschranken (108) verbunden ist, und in einem Master-Controller (112), der mit dem mindestens einen Slave-Controller (110) verbunden ist, realisiert ist.

**13.** Anordnung bestehend aus einer Lichtschranke (108), die einen optischen Sender (T) und einen optischen Empfänger (R) aufweist, an den der Sender (T) Licht (L) aussendet, und einer Steuerschaltung nach Anspruch 10 oder 11.

**14.** Selbstbedienungsterminal (100), das eine Anordnung nach Anspruch 13 aufweist.

**15.** Selbstbedienungsterminal (100) nach Anspruch 14, **dadurch gekennzeichnet, dass** das Selbstbedienungsterminal (100) mindestens einen Slave-Controller (110) aufweist, der mit einer oder mehrerer der Lichtschranken (108) verbunden ist, und einen Master-Controller (112) aufweist, der mit dem mindestens einen Slave-Controller (110) verbunden ist, und dass die Steuerschaltung in dem mindestens einen Slave-Controller (110) und dem Master-Controller (112) realisiert ist.

## Claims

**1.** Method (1000) for controlling at least one light barrier (108), wherein an optical transmitter (T) transmits light (L) to an optical receiver (R), wherein the received light (L) is taken as a basis for ascertaining a present reception level (RV), and wherein a control circuit (110) is used to check whether the present reception level (RV) is below a lower threshold value (THl) or is above an upper threshold value (THh), in order to establish whether or not the light barrier (108) is broken,
**characterized in that**
the threshold values (THl; THh) are first of all set on the basis of a prescribable minimum reception level (TVm), which marks a lower limit for the usable reception levels produced by the receiver (R), such that the threshold values (THl; THh) each correspond to a fraction of the minimum reception level (TVm), wherein a permissible reception level range (RNG) is defined between the minimum reception level (TVm) and a prescribable saturation reception level (SL), and wherein a first series of steps (1100) involves checking whether the present reception level (RV) is outside this permissible reception level range (RNG) (step 1112), and if this is the case a second series of steps (1200) involves at least one parameter (SC) for the operation of the optical transmitter (T) being calibrated on the basis of the minimum reception level (TVm) and/or the saturation reception level (SL) (1232), wherein the parameter (SC) is calibrated by calculating a gradient (grad; gradI) of a characteristic curve (I) that is characteristic of the light barrier (108) (1221) and wherein the parameter (SC) is reset to a target value (TC) that is calculated on the basis of the gradient (gradI) (steps 1231, 1232) .

**2.** Method (1000) according to Claim 1, **characterized in that** the second series of steps (1200), in particular after the parameter (SC) has been recalculated and set (steps 1231, 1232), in particular wherein the parameter (SC) indicates the operating current for the optical transmitter (T), also involves the present reception level (RV) being checked (block 1240), specifically whether the present reception level (RV) is lower than the minimum reception level (TVm) (step 1242), and if this is the case the threshold values (THl; THh) are recalculated and set on the basis of the present reception level (RV) (steps 1244, 1245) or otherwise the already set threshold values (THl; THh) continue to be used (steps 1243, 1245).

**3.** Method (1000) according to Claim 2, **characterized in that** the reset threshold values (THl; THh) each correspond to a fraction of the present reception level (RV) .

**4.** Method (1000) according to one of the preceding claims, **characterized in that** the lower threshold value (THl) is set such that the fraction corresponds to 30%-60%, in particular 50%, of the minimum reception level (TVm) or of the present reception level (RV), and **in that** the upper threshold value (THh) is set such that the fraction corresponds to 60%-90%, in particular 70%, of the minimum reception level (TVm) or of the present reception level (RV).

5. Method (1000) according to one of the preceding claims, **characterized in that** the upper threshold value (THh) is set such that it is higher than the lower threshold value (THl) by at least 10%, in particular 20%.

6. Method (1000) according to one of the preceding claims, **characterized in that** if the present reception level (RV) is above the saturation reception level (SL) (step 1212), the calibrated parameter (SC) is progressively reduced (steps 1213, 1214) until the present reception level (RV) at the receiver (R) is below the prescribable saturation reception level (SL), in particular wherein the parameter (SC) indicates the operating current for the optical transmitter (T).

7. Method (1000) according to one of the preceding claims, **characterized in that** the parameter (SC) indicates the operating current, in particular a current level (SC), for the optical transmitter (T).

8. Method (1000) according to Claim 7,

   **characterized in that** the gradient (grad) is calculated on the assumption that the respective characteristic curve (I, II, III) has an initially linear trend from the origin, which means that the gradient (grad) is calculated according to the following formula (1221):

$$grad = RV * w / SC,$$

   where RV is the present reception level and w is a weighting factor and SC is the set parameter, which in particular indicates the operating current, in particular the current level (SC), for the optical transmitter (T).

9. Method (1000) according to Claim 7,

   **characterized in that** the target value (TC) for the parameter (SC) is calculated according to the following formula (1231):

$$TC = \{ TVm + (SL - TVm) / 2 \} * w / grad,$$

   where TVm is the minimum reception level; SL is the saturation reception level; w is a weighting factor and grad is the calculated gradient.

10. Method (1000) according to one of Claims 7-9, **characterized in that** the second series of steps (1200) also involves checking whether the light barrier (108), in particular the optical receiver (R), is covered (block 1220) by checking whether the calculated gradient (gradI) is lower than a minimum gradient value (milliGradientCovered), and if this is the case the second series of steps (1200) involves the parameter (SC) for the operation of the optical transmitter (T) not being calibrated, or otherwise the parameter (SC), which in particular indicates the operating current, in particular the current level (SC), for the optical transmitter (T), being recalculated and set on the basis of the minimum reception level (TVm) and the saturation reception level (SL) and also the calculated gradient (gradI) (steps 1231, 1232).

11. Control circuit (110) for controlling at least one light barrier (108), wherein an optical transmitter (T) transmits light (L) to an optical receiver (R), wherein the control circuit (110) is connected to the receiver (R) or to a converter stage (CNV) connected downstream thereof and ascertains a present reception level (RV) that is dependent on the received light (L), and wherein the control circuit (110) checks whether the present reception level (RV) is below a lower threshold value (THl) or is above an upper threshold value (THh), in order to establish whether or not the light barrier (108) is broken, **characterized in that**
    the control circuit (110) is connected to the optical transmitter (T) or to a driver stage (DRV) connected upstream thereof and controls the operation of the optical transmitter (T), wherein the control circuit (110) first of all sets the threshold values (THl; THh) on the basis of a prescribable minimum reception level (TVm), which marks a lower limit for the usable reception levels produced by the receiver (R), such that the threshold values (THl; THh) each correspond to a fraction of the minimum reception level (TVm), wherein a permissible reception level range (RNG) is defined between the minimum reception level (TVm) and a prescribable saturation reception level (SL), and wherein the control circuit (110) uses a first series of steps (1100) to check whether the present reception level (RV) is outside this permissible reception level range (RNG) (step 1112), and if this is the case uses a second series of steps (1200) to calibrate at least one parameter (SC) for the operation of the optical transmitter (T) on the basis of the minimum reception level (TVm) and/or the saturation reception level (SL) (1232), wherein the control circuit (110) calibrates the parameter (SC) by virtue of the control circuit (110) calculating a gradient (grad; gradI) of a characteristic curve (I) that is characteristic of the light barrier (108) (1221) and resetting the parameter (SC) to a target value (TC) that the control circuit (110) calculates on the basis of the gradient (gradI) (steps 1231, 1232).

**12.** Control circuit according to Claim 11, **characterized in that** the control circuit is realized in at least one control unit (110, 112), in particular is realized in at least one slave controller (110), which is connected to one or more of the light barriers (108), and in a master controller (112), which is connected to the at least one slave controller (110).

**13.** Arrangement consisting of a light barrier (108), which has an optical transmitter (T) and an optical receiver (R) to which the transmitter (T) transmits light (L), and a control circuit according to Claim 10 or 11.

**14.** Self-service terminal (100) that has an arrangement according to Claim 13.

**15.** Self-service terminal (100) according to Claim 14, **characterized in that** the self-service terminal (100) has at least one slave controller (110), which is connected to one or more of the light barriers (108), and has a master controller (112), which is connected to the at least one slave controller (110), and **in that** the control circuit is realized in the at least one slave controller (110) and the master controller (112).

## Revendications

**1.** Procédé (1000) pour commander au moins une barrière photoélectrique (108), de la lumière (L) étant émise par un émetteur optique (T) à un récepteur optique (R), un niveau de réception actuel (RV) étant déterminé en fonction de la lumière (L) reçue, et un contrôle étant effectué au moyen d'un circuit de commande (110) afin de vérifier si le niveau de réception actuel (RV) est inférieur à une valeur de seuil basse (THl) ou est supérieur à une valeur de seuil haute (THh) afin de déterminer si la barrière photoélectrique (108) est interrompue ou non,
**caractérisé en ce que**
les valeurs de seuil (THl; THh) sont tout d'abord réglées en fonction d'un niveau de réception minimal (TVm) pouvant être prédéfini, lequel marque une limite inférieure pour le niveau de réception utilisable généré par le récepteur (R), de telle sorte que les valeurs de seuil (THl; THh) correspondent respectivement à une fraction du niveau de réception minimal (TVm), une plage de niveaux de réception admissible (RNG) étant définie entre le niveau de réception minimal (TVm) et un niveau de réception de saturation (SL) pouvant être prédéfini, et un contrôle étant effectué dans une première séquence d'étapes (1100) en vue de vérifier si le niveau de réception actuel (RV) se trouve en-dehors de cette plage de niveaux de réception admissible (RNG) (étape 1112) et, si c'est le cas, au moins un paramètre (SC) pour le fonctionnement de l'émetteur optique (T) est étalonné (1232) dans une deuxième séquence d'étapes (1200) en fonction du niveau de réception minimal (TVm) et/ou du niveau de réception de saturation (SL), le paramètre (SC) étant étalonné en calculant (1221) une pente (grad ; gradI) d'une courbe caractéristique (I) qui caractérise la barrière photoélectrique (108) et le paramètre (SC) étant nouvellement réglé à une valeur cible (TC), laquelle est calculée en fonction de la pente (gradI) (étapes 1231, 1232).

**2.** Procédé (1000) selon la revendication 1, **caractérisé en ce que** dans la deuxième séquence d'étapes (1200), en particulier après que le paramètre (SC) a été nouvellement calculé et réglé (étapes 1231, 1232), le paramètre (SC) indiquant notamment le courant de fonctionnement pour l'émetteur optique (T), le niveau de réception actuel (RV) est également contrôlé (bloc 1240), et ce en vue de vérifier si le niveau de réception actuel (RV) est inférieur au niveau de réception minimal (TVm) (étape 1242) et, si c'est le cas, les valeurs de seuil (THl ; THh) sont nouvellement calculées et réglées en fonction du niveau de réception actuel (RV) (étapes 1244, 1245) ou, dans le cas contraire, les deux valeurs de seuil (THl ; THh) réglées continuent d'être utilisées (étapes 1243, 1245).

**3.** Procédé (1000) selon la revendication 2, **caractérisé en ce que** les valeurs de seuil (THl ; THh) nouvellement réglées correspondent respectivement à une fraction du niveau de réception actuel (RV).

**4.** Procédé (1000) selon l'une des revendications précédentes, **caractérisé en ce que** la valeur de seuil basse (THl) est réglée de telle sorte que la fraction correspond à 30 % à 60 %, notamment à 50 %, du niveau de réception minimal (TVm) ou au niveau de réception actuel (RV), et **en ce que** la valeur de seuil haute (THh) est réglée de telle sorte que la fraction correspond à 60 % à 90 %, notamment à 70 %, du niveau de réception minimal (TVm) ou au niveau de réception actuel (RV).

**5.** Procédé (1000) selon l'une des revendications précédentes, **caractérisé en ce que** la valeur de seuil haute (THh) est réglée de telle sorte qu'elle est supérieure d'au moins 10 %, notamment de 20 %, à la valeur de seuil basse (THl).

**6.** Procédé (1000) selon l'une des revendications précédentes, **caractérisé en ce que** dans le cas où le niveau de réception actuel (RV) se trouve au-dessus du niveau de réception de saturation (SL) (étape 1212), le paramètre étalonné (SC) est réduit successivement (étapes 1213, 1214) jusqu'à ce que le niveau de réception actuel (RV) au niveau du récepteur (R) soit inférieur au niveau de réception de saturation (SL) pouvant être prédéfini, le paramètre (SC) indiquant notamment le courant de fonctionnement pour l'émetteur optique (T).

**7.** Procédé (1000) selon l'une des revendications précédentes, **caractérisé en ce que** le paramètre (SC) indique le courant de fonctionnement, en particulier un niveau de courant (SC), pour l'émetteur optique (T).

**8.** Procédé (1000) selon la revendication 7, **caractérisé en ce que** la pente (grad) est calculée en prenant comme hypothèse que la courbe caractéristique (I, II, III) respective, à partir du point zéro, suit tout d'abord un tracé linéaire, de sorte que la pente (grad) est calculée conformément à la formule suivante (1221) :

$$grad = RV*w/SC,$$

RV désignant le niveau de réception actuel et w étant un facteur de pondération et SC le paramètre réglé, lequel indique notamment le courant de fonctionnement, en particulier le niveau de courant (SC), pour l'émetteur optique (T).

**9.** Procédé (1000) selon la revendication 7, **caractérisé en ce que** la valeur cible (TC) pour le paramètre (SC) est calculée conformément à la formule suivante (1231) :

$$TC = \{TVm + (SL - TVm):2\}*w/grad,$$

TVm désignant le niveau de réception minimal ; SL le niveau de réception de saturation ; w étant un facteur de pondération et grad la pente calculée.

**10.** Procédé (1000) selon l'une des revendications 7 à 9, **caractérisé en ce que** dans la deuxième séquence d'étapes (1200), un contrôle est également effectué afin de vérifier si la barrière photoélectrique (108), notamment le récepteur optique (R), est recouverte (bloc 1220), en contrôlant si la pente calculée (gradI) est inférieure à une valeur de pente minimale (milliGradientCovered) et, si c'est le cas, le paramètre (SC) pour le fonctionnement de l'émetteur optique (T) n'est pas étalonné dans la deuxième séquence d'étapes (1200) ou, dans le cas contraire, le paramètre (SC), lequel indique notamment le courant de fonctionnement, en particulier le niveau de courant (SC), pour l'émetteur optique (T), est nouvellement calculé et réglé en fonction du niveau de réception minimal (TVm) et du niveau de réception de saturation (SL) ainsi que de la pente calculée (gradI) (étapes 1231, 1232).

**11.** Circuit de commande (110) pour commander au moins une barrière photoélectrique (108), un émetteur optique (T) émettant de la lumière (L) à un récepteur optique (R), le circuit de commande (110) étant relié au récepteur (R) ou à un étage convertisseur (CNV) branché en aval de celui-ci et déterminant un niveau de réception actuel (RV) dépendant de la lumière (L) reçue, et le circuit de commande (110) vérifiant si le niveau de réception actuel (RV) est inférieur à une valeur de seuil basse (THl) ou est supérieur à une valeur de seuil haute (THh) afin de déterminer si la barrière photoélectrique (108) est interrompue ou non,
**caractérisé en ce que**
le circuit de commande (110) est relié à l'émetteur optique (T) ou à un étage d'attaque (DRV) branché en amont de celui-ci et commande le fonctionnement de l'émetteur optique (T), le circuit de commande (110) réglant tout d'abord les valeurs de seuil (THl ; THh) en fonction d'un niveau de réception minimal (TVm) pouvant être prédéfini, lequel marque une limite inférieure pour le niveau de réception utilisable généré par le récepteur (R), de telle sorte que les valeurs de seuil (THl ; THh) correspondent respectivement à une fraction du niveau de réception minimal (TVm), une plage de niveaux de réception admissible (RNG) étant définie entre le niveau de réception minimal (TVm) et un niveau de réception de saturation (SL) pouvant être prédéfini, et le circuit de commande (110) vérifiant, dans une première séquence d'étapes (1100), si le niveau de réception actuel (RV) se trouve en-dehors de cette plage de niveaux de réception admissible (RNG) (étape 1112) et, si c'est le cas, dans une deuxième séquence d'étapes (1200), étalonne (1232) au moins un paramètre (SC) pour le fonctionnement de l'émetteur optique (T) en fonction du niveau de réception minimal (TVm) et/ou du niveau de réception de saturation (SL), le circuit de commande (110) étalonnant le paramètre (SC) **en ce que** le circuit de commande (110) calcule (1221) une pente (grad ; gradI) d'une courbe caractéristique (I) qui caractérise la barrière photoélectrique (108) et règle nouvellement le paramètre (SC) à une valeur cible (TC), laquelle est calculée par le circuit de commande (110) en fonction de la pente (gradI) (étapes 1231, 1232).

**12.** Circuit de commande selon la revendication 11, **caractérisé en ce que** le circuit de commande est réalisé dans au moins une unité de commande (110, 112), en particulier réalisé dans au moins un contrôleur esclave (110), lequel est relié à une ou plusieurs des barrières photoélectriques (108), et dans un contrôleur maître (112) qui est relié à l'au moins un contrôleur esclave (110).

**13.** Arrangement composé d'une barrière photoélectrique (108), laquelle possède un émetteur optique (T) et un récepteur optique (R) auquel l'émetteur (T) envoie de la lumière (L), et un circuit de commande selon la revendication 10 ou 11.

**14.** Terminal en libre-service (100), lequel possède un arrangement selon la revendication 13.

**15.** Terminal en libre-service (100) selon la revendication 14, **caractérisé en ce que** le terminal en libre-service (100) possède au moins un contrôleur esclave (110), lequel est relié à une ou plusieurs des barrières photoélectriques (108), et possède un contrôleur maître (112), lequel est relié à l'au moins un contrôleur esclave (110), et **en ce que** le circuit de commande est réalisé dans l'au moins un contrôleur esclave (110) et le contrôleur maître (112).

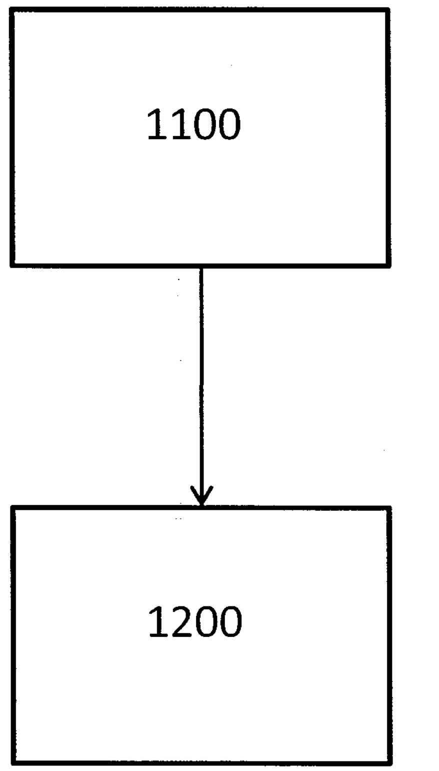


Fig. 1

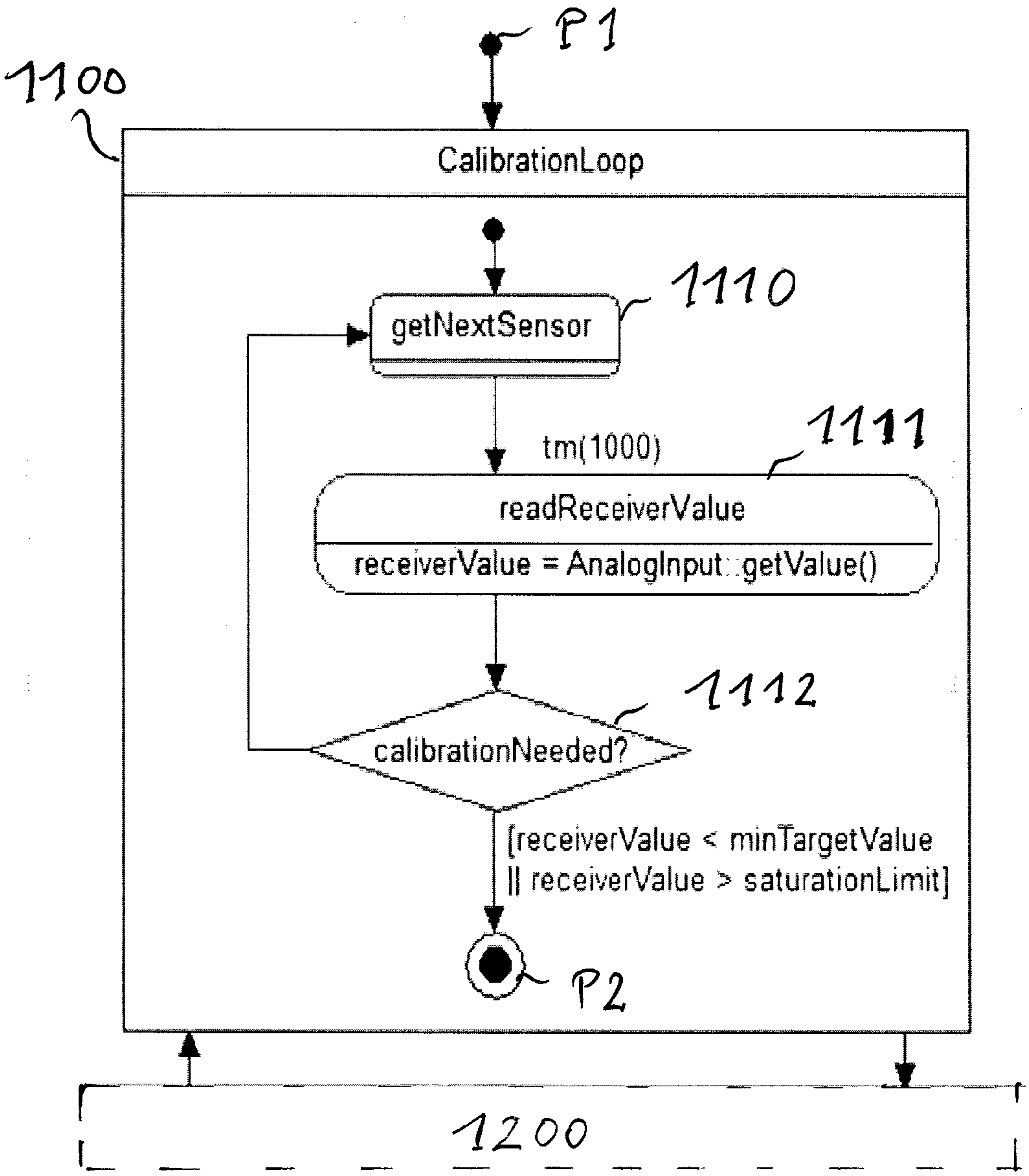
P1
1100
CalibrationLoop
getNextSensor
1110
tm(1000)
1111
readReceiverValue
receiverValue = AnalogInput::getValue()
1112
calibrationNeeded?
[receiverValue < minTargetValue
|| receiverValue > saturationLimit]
P2
1200

Fig. 2a

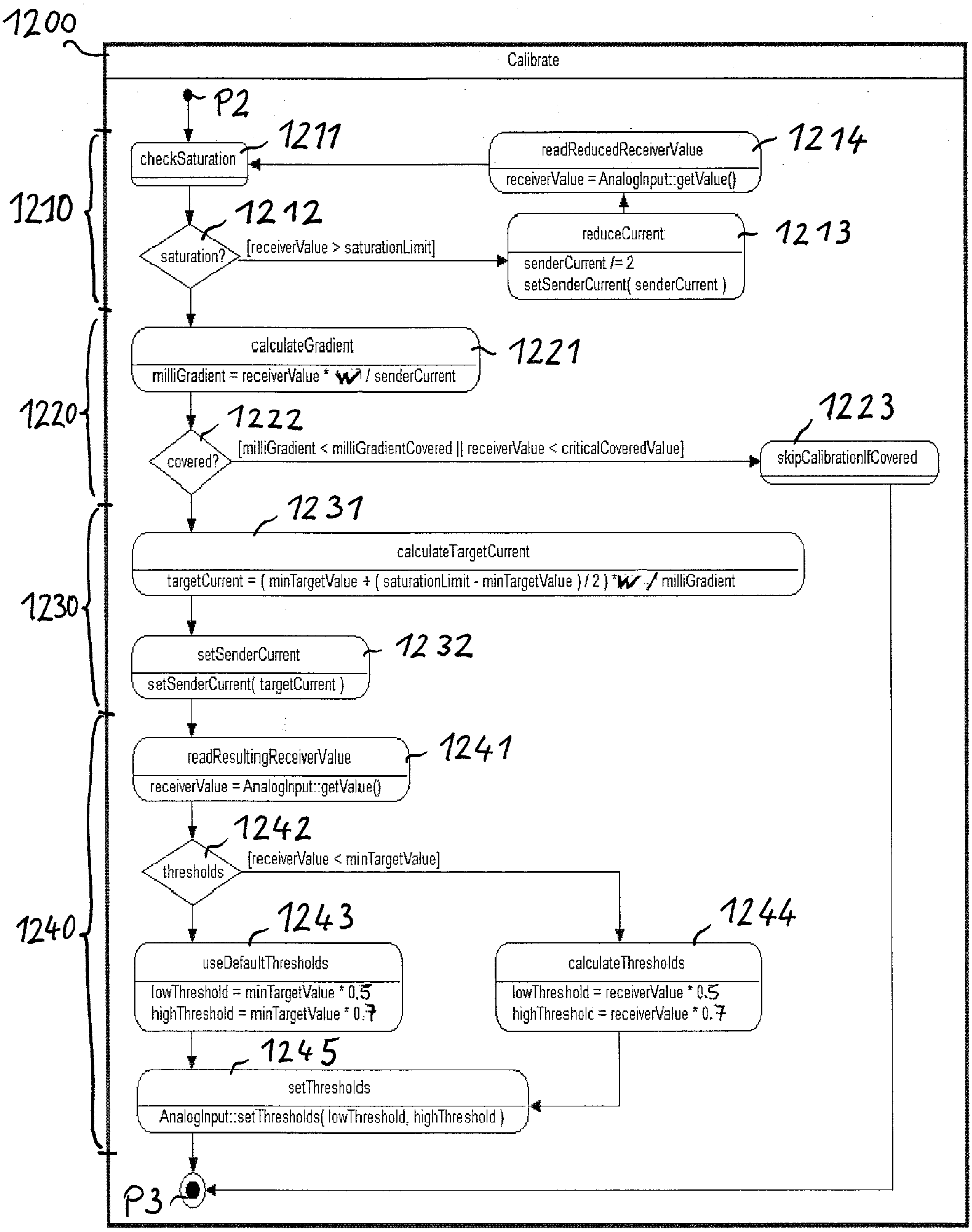
1200
Calibrate
P2
checkSaturation
1211
readReducedReceiverValue
receiverValue = AnalogInput::getValue()
1214
1210
1212
saturation?
[receiverValue > saturationLimit]
reduceCurrent
senderCurrent /= 2
setSenderCurrent( senderCurrent )
1213
calculateGradient
milliGradient = receiverValue * W / senderCurrent
1221
1220
1222
covered?
[milliGradient < milliGradientCovered || receiverValue < criticalCoveredValue]
1223
skipCalibrationIfCovered
1231
calculateTargetCurrent
targetCurrent = ( minTargetValue + ( saturationLimit - minTargetValue ) / 2 ) *W / milliGradient
1230
setSenderCurrent
setSenderCurrent( targetCurrent )
1232
readResultingReceiverValue
receiverValue = AnalogInput::getValue()
1241
1242
thresholds
[receiverValue < minTargetValue]
1240
1243
useDefaultThresholds
lowThreshold = minTargetValue * 0.5
highThreshold = minTargetValue * 0.7
1244
calculateThresholds
lowThreshold = receiverValue * 0.5
highThreshold = receiverValue * 0.7
1245
setThresholds
AnalogInput::setThresholds( lowThreshold, highThreshold )
P3

Fig. 2b

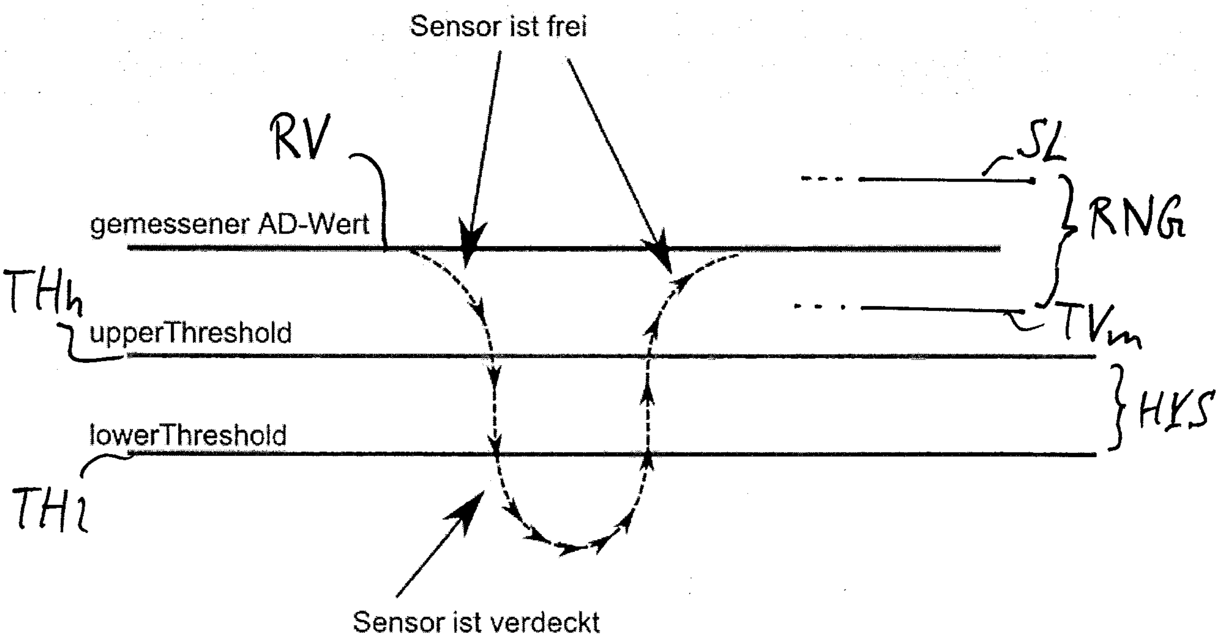
Sensor ist frei
RV
SL
RNG
gemessener AD-Wert
THh
upperThreshold
TVm
HYS
lowerThreshold
THl
Sensor ist verdeckt

Fig. 3a

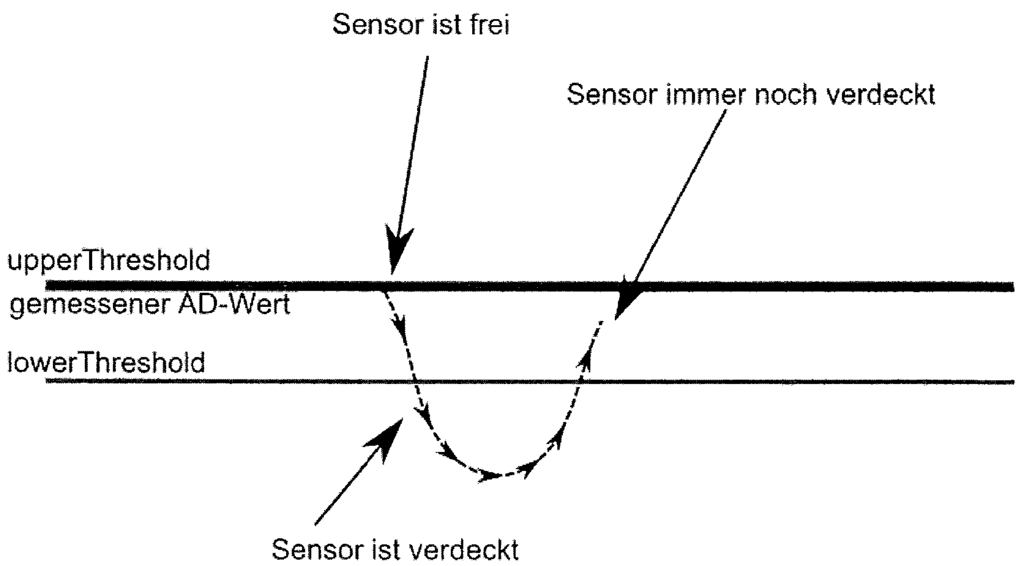
Sensor ist frei
Sensor immer noch verdeckt
upperThreshold
gemessener AD-Wert
lowerThreshold
Sensor ist verdeckt

Fig. 3b

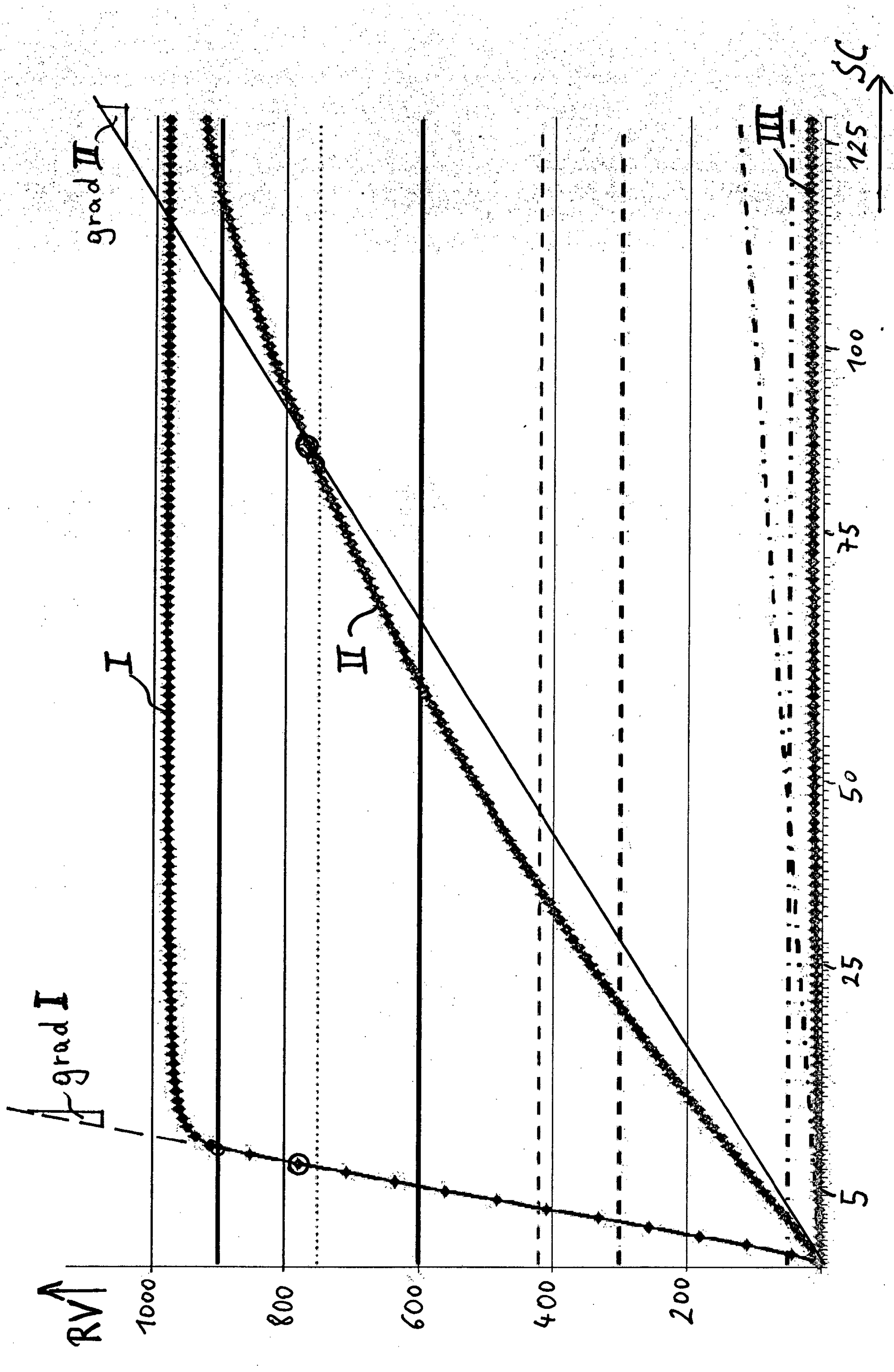
RV
1000
800
600
400
200
SC
5
25
50
75
100
125
I
II
III
grad I
grad II

Fig. 4a

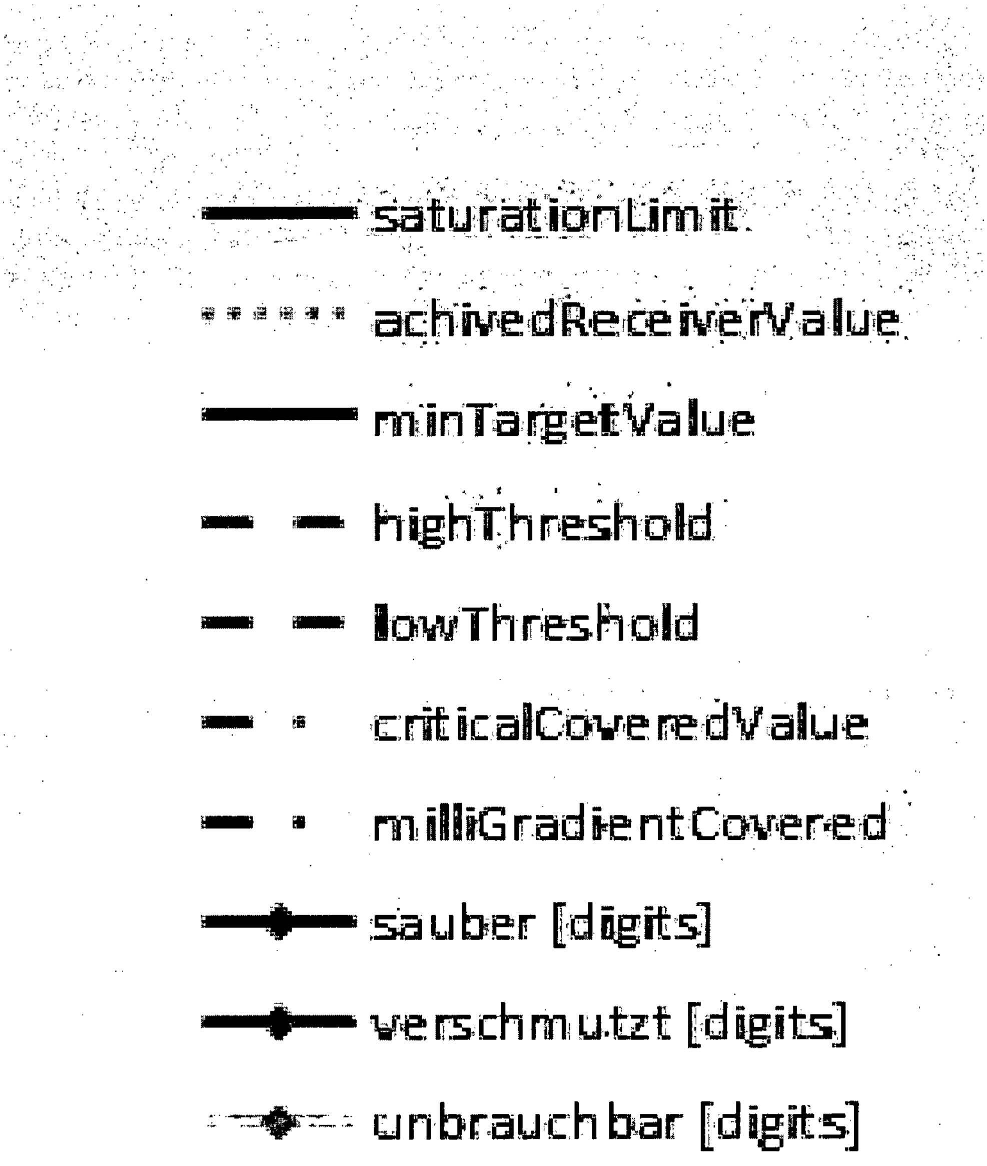
saturationLimit
achivedReceiverValue
minTargetValue
highThreshold
lowThreshold
criticalCoveredValue
milliGradientCovered
sauber [digits]
verschmutzt [digits]
unbrauchbar [digits]

Fig. 4b

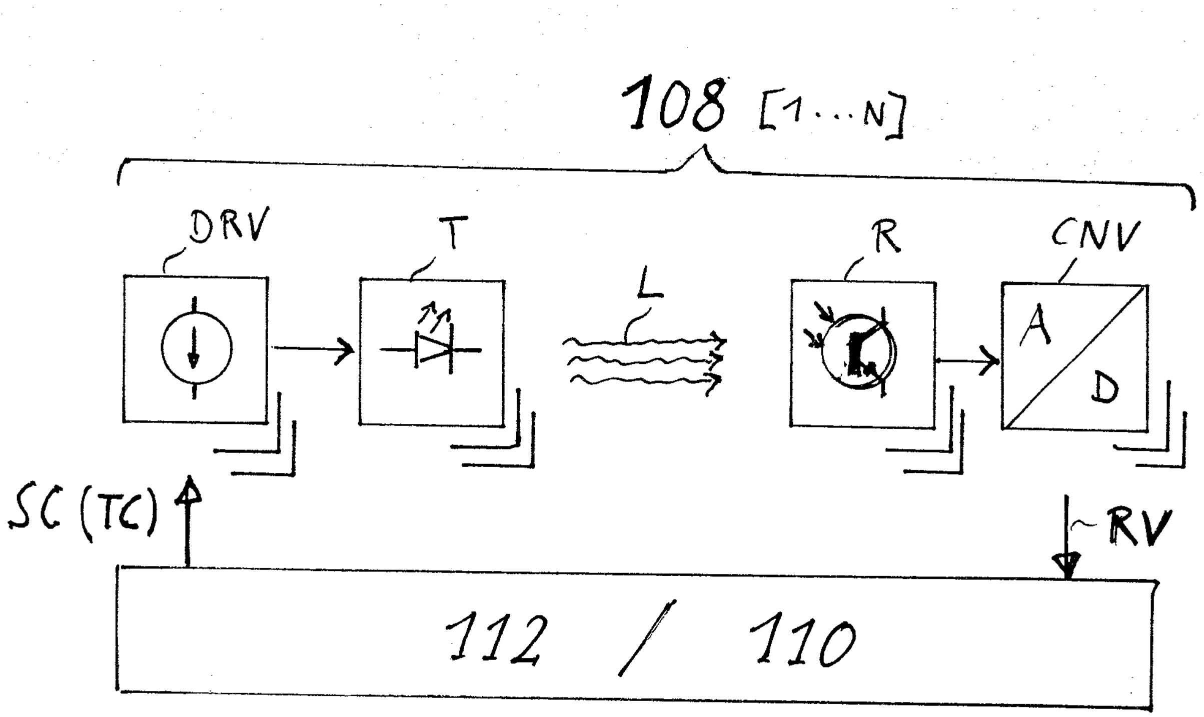


Fig. 5

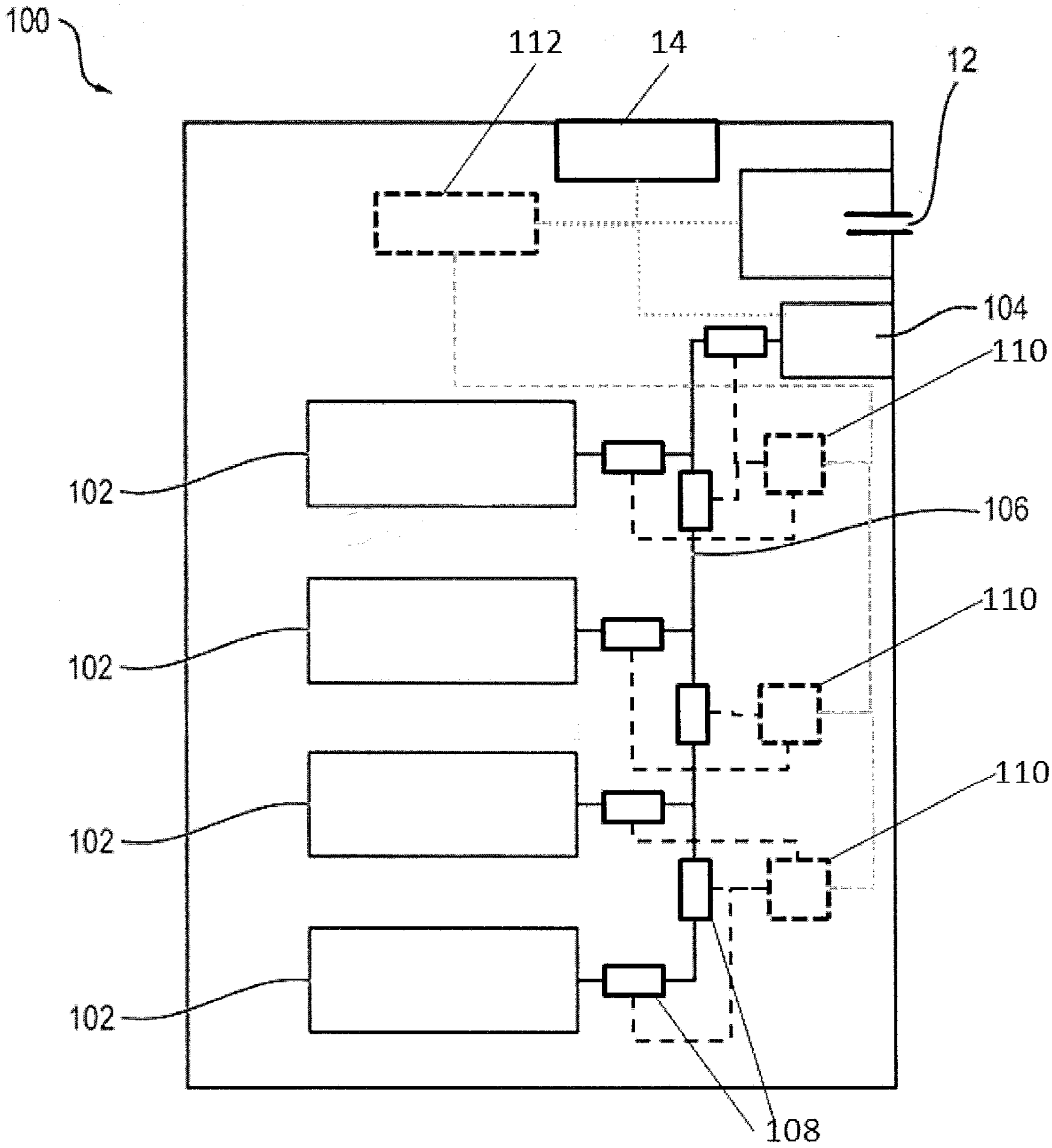


Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10038025 A1
- DE 102005047337 A1
- EP 0418989 A2
- DE 4324590 A1
- DE 4237311 C1